(19) Europäisches Patentamt
European Patent Office
Office européen des brevets

(11) **EP 3 882 534 B1**

(12) **EUROPEAN PATENT SPECIFICATION**

(45) Date of publication and mention
of the grant of the patent:
**01.05.2024 Bulletin 2024/18**

(21) Application number: **19888805.9**

(22) Date of filing: **29.05.2019**

(51) International Patent Classification (IPC):
*F24F 13/14 (2006.01)*   *F24F 110/10 (2018.01)*
*F24F 110/20 (2018.01)*   *F24F 11/64 (2018.01)*
*F24F 11/65 (2018.01)*   *F24F 11/77 (2018.01)*
*F24F 11/79 (2018.01)*

(52) Cooperative Patent Classification (CPC):
**F24F 11/65; F24F 11/64; F24F 11/77; F24F 11/79;**
F24F 13/14; F24F 2110/10; F24F 2110/20;
Y02B 30/70

(86) International application number:
**PCT/CN2019/089082**

(87) International publication number:
**WO 2020/107841 (04.06.2020 Gazette 2020/23)**

(54) **AIR CONDITIONER CONTROL METHOD, ELECTRONIC DEVICE AND STORAGE MEDIUM**

KLIMAANLAGENSTEUERUNGSVERFAHREN, ELEKTRONISCHE VORRICHTUNG UND SPEICHERMEDIUM

PROCÉDÉ DE COMMANDE DE CLIMATISEUR, DISPOSITIF ÉLECTRONIQUE ET SUPPORT D'INFORMATIONS

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 30.11.2018   CN 201811460130
30.11.2018   CN 201811458695
30.11.2018   CN 201811459838

(43) Date of publication of application:
**22.09.2021 Bulletin 2021/38**

(73) Proprietor: **GD Midea Air-Conditioning Equipment Co., Ltd.**
**Foshan, Guangdong 528311 (CN)**

(72) Inventor: **LI, Shang**
**Foshan, Guangdong 528311 (CN)**

(74) Representative: **Whitlock, Holly Elizabeth Ann et al**
**Maucher Jenkins**
**Seventh Floor Offices**
**Artillery House**
**11-19 Artillery Row**
**London SW1P 1RT (GB)**

(56) References cited:
**CN-A- 105 546 747     CN-A- 105 890 119**
**CN-A- 108 592 338**

**Description**

**FIELD**

The present invention relates to the technical field of air conditioner equipment, and in particular to an air conditioner control method, an electronic device and a computer-readable storage medium.

**BACKGROUND**

In the related art, air conditioners can be used to adjust the indoor air temperature. In the cooling mode, the temperature, speed and direction of the cold wind of the air conditioner will directly affect the user's comfort experience. In order to improve the comfort experience, the air conditioner may be provided with a special sensor to detect the user's position through the sensor, to achieve the function of keeping wind away from people, to avoid direct blowing of cold wind to users in cooling mode. However, the addition of the special sensor will increase the cost of the air conditioner, reduce manufacturing efficiency, and increase maintenance costs. Therefore, how to control the operation of the air conditioner to improve the user's comfort experience has become a technical problem to be solved.
CN 108 592 338 A relates generally to an air conditioner control method.

**SUMMARY**

Aspects of the invention are set out in the claims.
An air conditioner control method according the invention is defined in claim 1.
The environmental parameter of the air conditioner comprises an environmental humidity, the system parameter of the air conditioner comprises a wind speed level of the air conditioner and a working time in the comfort mode, and when the operation mode of the air conditioner is the comfort mode, said controlling the wind guide component to open at a pre-set angle, acquiring an environmental parameter and a system parameter of the air conditioner, and determining a rotating speed of the blower and a working frequency of the air conditioner according to the environmental parameter and/or the system parameter of the air conditioner comprise: when the air conditioner is in the comfort mode, controlling the wind guide component to open at the pre-set angle, and recording the working time in the comfort mode; acquiring the wind speed level, and determining the rotating speed of the blower according to the wind speed level and controlling the blower of the air conditioner to operate at the rotating speed; and acquiring the environmental humidity, and determining the working frequency of the air conditioner according to the working time in the comfort mode and the environmental humidity.
In some embodiments, the air conditioner control method comprises: when the air conditioner receives a control instruction to enter the comfort mode or a draft rating index reaches a comfort threshold, controlling the air conditioner to enter the comfort mode.
In some embodiments, the comfort mode comprises an anti-direct blowing mode and/or a soft wind mode, the comfort threshold comprises a first comfort threshold and a second comfort threshold, and the air conditioner control method comprises: when the air conditioner receives the control instruction to enter the anti-direct blowing mode or the draft rating index reaches the first comfort threshold, controlling the air conditioner to enter the anti-direct blowing mode; or when the air conditioner receives the control instruction to enter the soft wind mode or the draft rating index reaches the second comfort threshold, controlling the air conditioner to enter the soft wind mode, wherein the second comfort threshold is less than the first comfort threshold.
In some embodiments, the wind guide component comprises an outer wind guide, the pre-set angle comprises a first pre-set angle, and said controlling the wind guide component to open at the pre-set angle comprises: controlling the outer wind guide to open at the first pre-set angle.
In some embodiments, the wind guide component comprises an inner wind guide, the pre-set angle comprises a second pre-set angle, and said controlling the wind guide component to open at the pre-set angle comprises: controlling the inner wind guide to open at the second pre-set angle.
In some embodiments, the wind speed level is calculated according to an automatic wind rule of the air conditioner, or determined according to a user setting.
In some embodiments, the rotating speed of the blower is related to the maximum blower rotating speed and the minimum blower rotating speed, the maximum wind speed level and the wind speed level of the air conditioner in the comfort mode.
In some embodiments, the rotating speed of the blower is calculated according to the following conditional formula:

$$W = (W\_max - W\_min)/Lv\_max \cdot Lv + W\_min;$$

where W is the rotating speed of the blower, W_max is the maximum blower rotating speed in the comfort mode, W_min is the minimum blower rotating speed in the comfort mode, Lv_max is the maximum wind speed level in the comfort mode, and Lv is the wind speed level in the comfort mode.

In some embodiments, the air conditioner is preset with a corresponding relationship between the working time, the environmental humidity, and the operating frequency, and said determining the working frequency of the air conditioner according to the working time and the environmental humidity comprises: determining the working frequency of the air conditioner according to the working time in the comfort mode, the environmental humidity, and the corresponding relationship.

In some embodiments, the environmental parameter of the air conditioner comprises an environmental temperature and an environmental humidity, the system parameter of the air conditioner comprises a user set temperature and a wind speed level of the air conditioner, and when the operation mode of the air conditioner is the windless mode, said acquiring an environmental parameter and a system parameter of the air conditioner, and determining a rotating speed of the blower, an angle of the wind guide component and a working frequency of the air conditioner according to the environmental parameter and/or the system parameter of the air conditioner comprise: when the air conditioner is in the windless mode, acquiring the environmental temperature, the environmental humidity, the user set temperature and the wind speed level, determining an opening angle of the wind guide component according to the environmental temperature, the environmental humidity and the user set temperature, and controlling the wind guide component to open according to the opening angle of the wind guide component; determining the rotating speed of the blower according to the wind speed level and controlling the blower of the air conditioner to operate at the rotating speed; and determining the working frequency of the air conditioner according to the opening angle of the wind guide component, the environmental temperature and the environmental humidity.

In some embodiments, the air conditioner control method comprises: when the air conditioner receives a control instruction to enter the windless mode or the draft rating index reaches a comfort threshold, controlling the air conditioner to enter the windless mode.

In some embodiments, the wind guide component comprises an outer wind guide, and said determining the opening angle of the wind guide component according to the environmental temperature, the environmental humidity and the user set temperature, and controlling the wind guide component to open according to the opening angle of the wind guide component comprise: when the environmental temperature is greater than a first pre-set temperature and a first set temperature, and the environmental humidity is not less than a first pre-set humidity, controlling the outer wind guide to open at a first windless preset angle, wherein the first set temperature is determined by the user set temperature and an adjustment value.

In some embodiments, said determining the opening angle of the wind guide component according to the environmental temperature, the environmental humidity and the user set temperature, and controlling the wind guide component to open according to the opening angle of the wind guide component comprise: when the environmental temperature is not greater than a second pre-set temperature, or the environmental temperature is not greater than a second set temperature, or the environmental humidity is not greater than a second pre-set humidity, controlling the outer wind guide to open at a second windless preset angle, wherein the second set temperature is the user set temperature, the second pre-set temperature is less than the first pre-set temperature, the second set temperature is less than the first set temperature, the second pre-set humidity is less than the first pre-set humidity, and the second windless pre-set angle is less than the first windless pre-set angle.

In some embodiments, the air conditioner is preset with a corresponding relationship between the opening angle of the wind guide component, the environmental temperature, the environmental humidity and the operating frequency, and said determining the working frequency of the air conditioner according to the opening angle of the wind guide component, the environmental temperature and the environmental humidity comprises: determining an adjustment frequency of the air conditioner according to the opening angle of the wind guide component, the environmental temperature, the environmental humidity and the corresponding relationship; and calculating the working frequency of the air conditioner according to the adjustment frequency, the wind speed level, and a preset coefficient.

In some embodiments, the preset coefficient comprises a first coefficient and a second coefficient, the corresponding relationship comprises a first relationship and a second relationship, the first coefficient is calculated by fitting the frequency points of the first relationship, the second coefficient is calculated by fitting the frequency points of the second relationship, and said determining the working frequency of the air conditioner according to the opening angle of the wind guide component, the environmental temperature and the environmental humidity comprises: when the outer wind guide is opened at the first windless preset angle, determining the adjustment frequency according to the environmental temperature, the environmental humidity and the first relationship, and calculating the working frequency of the air conditioner according to the adjustment frequency, the wind speed level, and the first coefficient; and when the outer wind guide is opened at the second windless preset angle, determining the adjustment frequency according to the environmental temperature, the environmental humidity and the second relationship, and calculating the working frequency of the air conditioner according to the adjustment frequency, the wind speed level, and the second coefficient.

In some embodiments, the wind guide component comprises an inner wind guide, and said determining the opening angle of the wind guide component according to the environmental temperature, the environmental humidity and the user set temperature, and controlling the wind guide component to open according to the opening angle of the wind guide component comprises: controlling the inner wind guide to open at a third windless preset angle.

In some implementation manners, the system parameter comprises the working time in the windless mode, and the air conditioner control method comprises: when the air conditioner is in the windless mode, recording the working time in the windless mode; and determining the working frequency of the air conditioner according to the environmental humidity and the working time in the windless mode.

In some embodiments, the wind speed level is calculated according to an automatic wind rule and the wind speed adjustment coefficient of the air conditioner, or calculated according to the wind speed level set by the user and the wind speed adjustment coefficient.

In some examples, the wind guide component comprises a vertical wind guide strip and a horizontal wind guide strip, and when the operation mode of the air conditioner is the windless mode, said acquiring an environmental parameter and a system parameter of the air conditioner, and determining a rotating speed of the blower, an angle of the wind guide component and a working frequency of the air conditioner according to the environmental parameter and/or the system parameter of the air conditioner comprise: detecting a current windless state of the air conditioner according to the environmental parameter and the system parameter of the air conditioner; when the current windless state is a rapid cooling state, controlling the vertical wind guide strip to move to a first wind guide angle and controlling the horizontal wind guide strip to move to a second wind guide angle, and controlling the blower to operate at a first target rotating speed, controlling the air conditioner to operate at a first working frequency; when the current windless state is a transitional state, controlling the vertical wind guide strip to close and controlling the horizontal wind guide strip to swing upwards, and controlling the blower to operate at a second target rotating speed, controlling the air conditioner to operate at a second working frequency, wherein the second wind guide angle is less than the first wind guide angle; and when the current windless state is a windless stable state, controlling the vertical wind guide strip to close and controlling the horizontal wind guide strip to swing downward, and controlling the blower to operate at a third target rotating speed, controlling the air conditioner to operate at a third refrigeration frequency, wherein both the second target rotating speed and the third target rotating speed are less than the first target rotating speed.

In some examples, the environmental parameter of the air conditioner comprises a first current environmental temperature, the system parameter of the air conditioner comprises a user set temperature, and when the operation mode of the air conditioner is the windless mode, said acquiring an environmental parameter and a system parameter of the air conditioner, and determining a rotating speed of the blower, an angle of the wind guide component and a working frequency of the air conditioner according to the environmental parameter and/or the system parameter of the air conditioner further comprise: acquiring the user set temperature and the first current environmental temperature; and generating a target rotating speed according to the current windless state, the user set temperature and the first current environmental temperature, wherein the first target rotating speed is less than the second target rotating speed and the third target rotating speed.

In some examples, the air conditioner control method further comprises: receiving a user control rotating speed instruction, and adjusting the target rotating speed according to the user control rotating speed instruction.

In some examples, the environmental parameter of the air conditioner comprises a second current environmental temperature and a current environmental humidity, the system parameter of the air conditioner comprises a working time in the windless mode and a current rotating speed of the blower, and when the operation mode of the air conditioner is the windless mode, said acquiring an environmental parameter and a system parameter of the air conditioner, and determining a rotating speed of the blower, an angle of the wind guide component and a working frequency of the air conditioner according to the environmental parameter and/or the system parameter of the air conditioner further comprise: acquiring the second current environmental temperature, the current environmental humidity, the working time and the current rotating speed; and determining the working frequency according to the current windless state, the second current environmental temperature, the current environmental humidity, the working time and the current rotating speed, wherein the maximum value of the first working frequency is greater than the maximum value of the second working frequency and the maximum value of the third working frequency.

In some examples, the air conditioner control method further comprises: receiving a windless instruction; and controlling the air conditioner to enter the rapid cooling state according to the windless instruction.

An electronic device according to the invention is defined in claim 12 and comprises: a memory, a processor, and a computer program stored in the memory and executable by the processor, wherein the processor, when executing the program, implements an air conditioner control method described in any one of the above embodiments.

A non-transitory computer-readable storage medium according to the invention is defined in claim 13 and has stored therein a computer program that, when executed by a processor, implements an air conditioner control method described in any one of the above embodiments.

One or more technical solutions provided in the embodiments of the present invention have at least the following technical effects or advantages:

1. In the present invention, it is possible to adjust the opening angle of the wind guide component, the rotating speed of the blower, and adjust the working frequency of the air conditioner according to the environmental parameter and/or the system parameter of the air conditioner, to reduce the user's feeling of cold wind blowing directly to the body in the cooling mode and improve the user's comfort experience.

2. In the present invention, it is possible to control the wind guide strip, the blower and the compressor to perform corresponding actions according to the current windless state, to achieve a windless experience effect, effectively meeting user needs and ensuring user experience, and improving the reliability and comfort of the air conditioner at low cost.

3. Through the joint control of the user set temperature, the environmental temperature, the environmental humidity, and the operating time, the requirements for cooling capacity and anti-condensation are effectively met, further ensuring user experience and meeting user's needs in an easy-to-implement manner.

The additional aspects and advantages of the embodiments of the present invention will be partly given in the following description, the invention being defined by the appended claims.

## BRIEF DESCRIPTION OF THE DRAWINGS

The above and/or additional aspects and advantages of the present invention will become obvious and easy to understand from the description of the embodiments in conjunction with the following drawings, in which:

FIG. 1 is a schematic structural diagram of an air conditioner.

FIG. 2 is another schematic structural diagram of an air conditioner.

FIG. 3 is another schematic structural diagram of an air conditioner.

FIG. 4 is a block diagram of an air conditioner.

FIG. 5 is a schematic flowchart of an air conditioner control method according to an embodiment of the present invention.

FIG. 6 is another schematic flowchart of an air conditioner control method according to an embodiment of the present invention.

FIG. 7 is another schematic flowchart of an air conditioner control method according to an embodiment of the present invention.

FIG. 8 is another schematic flowchart of an air conditioner control method according to an embodiment of the present invention.

FIG. 9 is another schematic flowchart of an air conditioner control method according to an embodiment of the present invention.

FIG. 10 is another schematic flowchart of an air conditioner control method according to an embodiment of the present invention.

FIG. 11 is another schematic flowchart of an air conditioner control method according to an embodiment of the present invention.

FIG. 12 is another schematic flowchart of an air conditioner control method according to an embodiment of the present invention.

FIG. 13 is another schematic flowchart of an air conditioner control method according to an embodiment of the present invention.

FIG. 14 is another schematic diagram of the structure of the air conditioner according to the embodiment of the present invention.

FIG. 15 is another schematic flowchart of an air conditioner control method according to an embodiment of the present invention.

FIG. 16 is another schematic flowchart of an air conditioner control method according to an embodiment of the present invention.

FIG. 17 is another schematic flowchart of an air conditioner control method according to an embodiment of the present invention.

FIG. 18 is a schematic diagram of the distribution of the pre-set temperature intervals according to an embodiment of the present invention.

FIG. 19 is a schematic diagram of the distribution of the pre-set humidity intervals according to an embodiment of the present invention.

FIG. 20 is another schematic diagram of the distribution of the pre-set temperature intervals according to an embodiment of the present invention.

FIG. 21 is another schematic diagram of the distribution of the pre-set humidity interval according to the embodiment of the present invention.

FIG. 22 is another schematic flowchart of an air conditioner control method according to an embodiment of the present invention.

FIG. 23 is another schematic flowchart of an air conditioner control method according to an embodiment of the present invention.

FIG. 24 is another block diagram of an air conditioner according to an embodiment of the present invention.

FIG. 25 is another schematic flowchart of an air conditioner control method according to an embodiment of the present invention.

FIG. 26 is another schematic flowchart of an air conditioner control method according to an embodiment of the present invention.

FIG. 27 is a schematic diagram of the transition of the windless state according to an embodiment of the present invention.

FIG. 28 is a schematic diagram of the division of an embodiment of the present invention.

FIG. 29 is a block diagram of an air conditioner control apparatus.

FIG. 30 is a block diagram of an air conditioner.

FIG. 31 is a block diagram of an electronic device according to an embodiment of the present invention.

REFERENCE NUMBERS OF MAIN COMPONENTS:

10, air conditioner; 11, blower; 12, wind guide component; 122, outer wind guide; 124, inner wind guide; 13, control apparatus; 132, memory; 134, processor; 14, humidity sensor; 15, air outlet; 16, temperature sensor; 17, compressor; 100, air conditioner; 20, air conditioner control apparatus; 22, detection module, 24, first control module;

200, electronic device; 201, memory; 202, processor.

## DETAILED DESCRIPTION

The embodiments of the present invention will be described in detail below, and examples of the embodiments are shown in the accompanying drawings. The same or similar elements and the elements having same or similar functions are denoted by like reference numerals throughout the descriptions. The embodiments described herein with reference to drawings are explanatory, illustrative, and used merely to generally understand the present invention that is defined in the appended claims.

In the specification, it should be understood that, the terms indicating orientation or position relationship such as "central", "left", "right", "inner", "outer" should be construed to refer to the orientation or position relationship as then described or as shown in the drawings. These terms are merely for convenience and concision of description and do not alone indicate or imply that the device or element referred to must have a particular orientation or must be configured or operated in a particular orientation. Thus, it cannot be understood to limit the present invention. In addition, terms such as "first" and "second" are used herein for purposes of description and are not intended to indicate or imply relative importance or significance or impliedly indicate quantity of the technical feature referred to. Thus, the feature defined with "first" and "second" may explicitly or implicitly includes one or more of the features. In the description of the present disclosure, "a plurality of" means two or more than two this features, unless specified otherwise.

In the embodiments of the present invention, it should be noted that, unless specified or limited otherwise, the terms "mounted", "connected", "coupled" and the like are used broadly, and may be, for example, fixed connections, detachable connections, or integrated connections; may also be mechanical or electrical connections or communicated with each other; may also be direct connections or indirect connections via intervening structures; may also be inner communications of two elements or mutual interaction between two elements, unless specified otherwise, which can be understood by those skilled in the art according to specific situations.

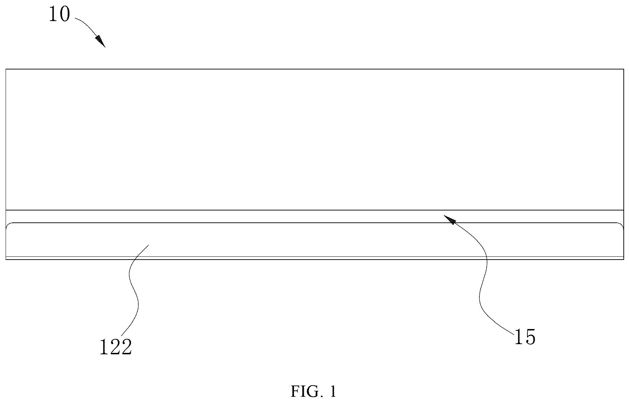

With reference to FIGS. 1 to 4 together, the air conditioner 10 includes a blower 11, a wind guide component 12, a control apparatus 13 and a humidity sensor 14. The control apparatus 13 is connected to the blower 11, the wind guide component 12 and the humidity sensor 14. The humidity sensor 14 is configured to detect the environmental humidity. For example, for a split type air conditioner, the humidity sensor 14 may be provided in the indoor unit to detect the humidity of the indoor environment. The indoor unit includes the blower 11 and the wind guide component 12.

The air conditioner control method according to an embodiment of the application can be applied to the air conditioner 10.

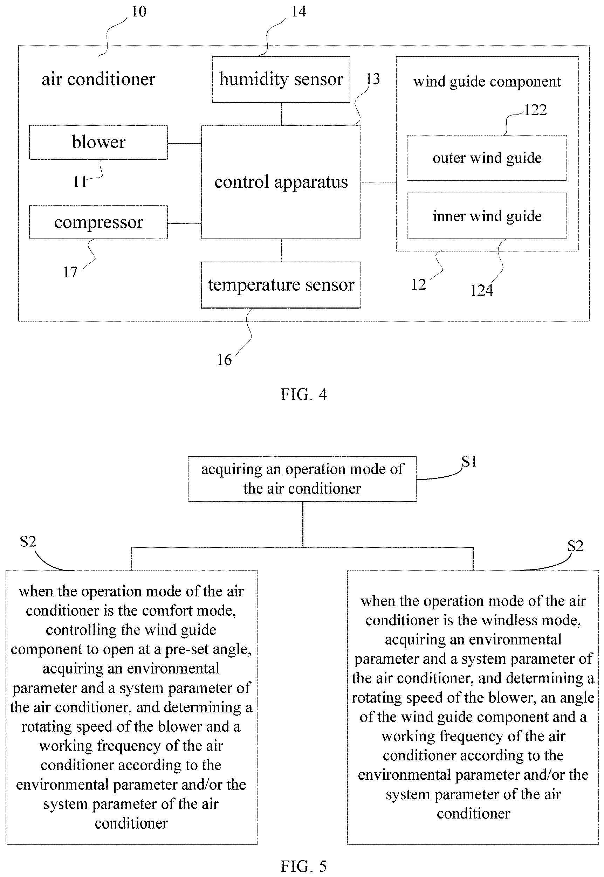

Referring to FIG. 5, in some embodiments, the air conditioner control method includes the following step S1, step S2 and step S3.

At step S1, an operation mode of the air conditioner 10 is acquired, wherein the operation mode of the air conditioner 10 includes a comfort mode and a windless mode.

[0041]   [0100] At step S2, when the operation mode of the air conditioner 10 is the comfort mode, the wind guide component 12 is controlled to open at a pre-set angle, an environmental parameter and a system parameter of the air conditioner 10 are acquired, and a rotating speed of the blower 11 and a working frequency of the air conditioner 10 are determined according to the environmental parameter and/or the system parameter of the air conditioner 10.

At step S3, when the operation mode of the air conditioner 10 is the windless mode, an environmental parameter and a system parameter of the air conditioner 10 are acquired, and a rotating speed of the blower 11, an angle of the wind guide component 12 and a working frequency of the air conditioner 10 are determined according to the environmental parameter and/or the system parameter of the air conditioner 10.

For the air conditioner 10, stepS1, step S2 and step S3 may be implemented by the control apparatus 13. That is to say, the control apparatus 13 may be configured to acquire an operation mode of the air conditioner 10. When the operation mode of the air conditioner 10 is the comfort mode, control apparatus 13 is configured to control the wind guide component 12 to open at a pre-set angle, acquire an environmental parameter and a system parameter of the air conditioner 10, and determine a rotating speed of the blower 11 and a working frequency of the air conditioner 10 according to the environmental parameter and/or the system parameter of the air conditioner 10. When the operation mode of the air conditioner 10 is the windless mode, the control apparatus 13 is configured to acquire an environmental parameter and a system parameter of the air conditioner 10, and determine a rotating speed of the blower 11, an angle of the wind guide component 12 and a working frequency of the air conditioner 10 according to the environmental parameter and/or the system parameter of the air conditioner 10.

For the air conditioner control method of the above embodiments, it is possible to adjust the opening angle of the wind guide component 12, the rotating speed of the blower, and the working frequency of the air conditioner 10 according to the environmental parameter and/or the system parameter of the air conditioner 10, to reduce the user's feeling of cold wind blowing directly to the body in the cooling mode and improve the user's comfort experience.

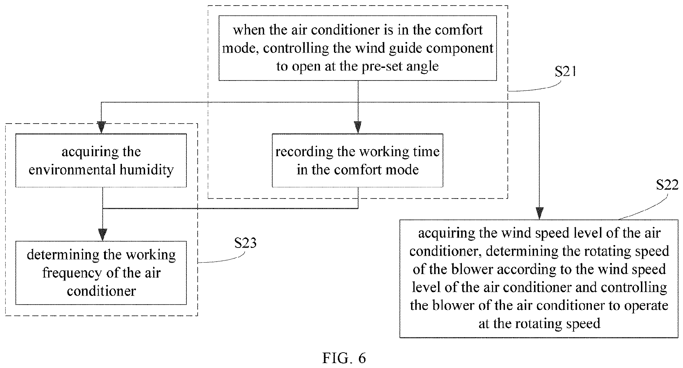

Referring to FIG. 6, according to the invention, the environmental parameter of the air conditioner 10 includes an environmental humidity, the system parameter of the air conditioner 10 includes a wind speed level of the air conditioner 10 and a working time in the comfort mode, step 2 includes the following step S21 to step S23.

At step S21, when the air conditioner 10 is in the comfort mode, the wind guide component 12 is controlled to open at the pre-set angle, and the working time in the comfort mod is recorded.

At step S22, the wind speed level of the air conditioner 10 is acquired, the rotating speed of the blower 11 is determined according to the wind speed level and the blower 11 of the air conditioner 10 is controlled to operate at the rotating speed.

At step S23, the environmental humidity is acquired, and the working frequency of the air conditioner 10 is determined according to the working time in the comfort mode and the environmental humidity.

For the air conditioner 10, step S21, step S22, and step S23 may be implemented by the control apparatus 13. That is to say, the control apparatus 13 may be configured to when the air conditioner 10 is in the comfort mod, control the wind guide component 12 to open at the pre-set angle, and record the working time in the comfort mode; acquire the wind speed level of the air conditioner 10, determine the rotating speed of the blower 11 according to the wind speed level and control the blower 11 of the air conditioner 10 to operate at the rotating speed; and acquire the environmental humidity, and determine the working frequency of the air conditioner 10 according to the working time in the comfort mode and the environmental humidity.

For the air conditioner control method of the above embodiments, when the air conditioner 10 is in the comfort mode, it is possible to adjust the opening angle of the wind guide component 12, the rotating speed of the blower, and adjust the working frequency of the air conditioner 10 according to the environmental humidity and the working time in the comfort mode, to reduce the user's feeling of cold wind blowing directly to the body in the cooling mode and improve the user's comfort experience.

The environmental humidity may be a relative humidity of the indoor environment. The air conditioner control method combined with the determination of the working frequency of the air conditioner 10 according to an environmental humidity is beneficial to reduce the risk of condensation during the cooling of the air conditioner 10, further improving the user's comfort experience.

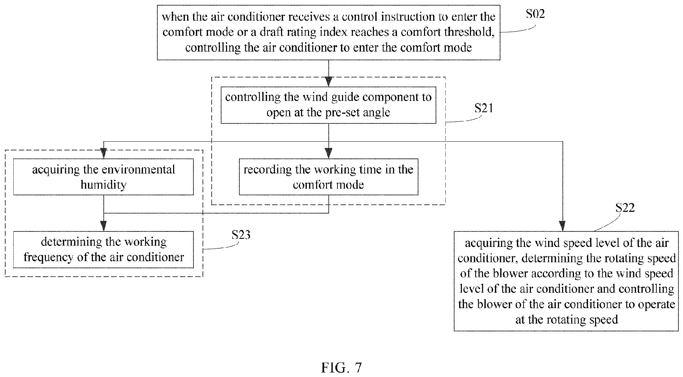

Referring to FIG. 7, in some embodiments, the air conditioner control method includes the following step S02.

At step S02, when the air conditioner 10 receives a control instruction to enter the comfort mode or a draft rating index (DR) reaches a comfort threshold, the air conditioner 10 is controlled to enter the comfort mode

Specifically, step S02 may be implemented by the control apparatus 13. That is to say, the control apparatus 13 may be configured to control the air conditioner 10 to enter the comfort mode when the air conditioner 10 receives a control instruction to enter the comfort mode or a draft rating index reaches a comfort threshold.

In an example, the user may input a control instruction through remote control, touch screen, control buttons, mobile phone, gesture or voice as needed, to actively control the air conditioner 10 to enter the comfort mode After the air conditioner 10 receives the control instruction to enter the comfort mode, the control apparatus 13 controls the air conditioner 10 to enter the comfort mode. At this time, the control apparatus 13 starts to record the working time in the comfort mode.

It should be noted that the air conditioner 10 may use a draft rating index as a standard for comfort evaluation, where the draft rating index is used to quantitatively predict the percentage of dissatisfied people caused by the blowing.

In an example, the draft rating index may be calculated by the following conditional formula:

$$\mathrm{DR} = (34\text{-}t_a) \cdot (v_a\text{-}0.05)^{0.62} \cdot (0.37 \cdot v_a \cdot T_u + 3.14);$$

where, DR is the draft rating index, if the actual DR>100%, then using DR=100%;

$t_a$ is the local air temperature in degrees Celsius (°C);

$v_a$ is the local average air velocity, in meters per second (m/s), if the actual $v_a \leq 0.05$ m/s, then using $v_a$ =0.05 m/s;

$T_u$ is the local turbulence intensity, defined as the ratio of standard deviation SD of the local air velocity to the average air velocity, i.e., $T_u$ =SD/ $v_a \times 100\%$;

Specifically, the standard deviation of the local air velocity is calculated by the following conditional formula:

$$\mathrm{SD} = \sqrt{\frac{1}{n-1} \sum_{i=1}^{n} (v_{ai} - v_a)^2};$$

where, $v_{ai}$ is the instantaneous velocity of the local air velocity at the $i$th moment.

It may be understood that when the user turns on the air conditioner 10, the air conditioner 10 may start the normal cooling mode. In the normal cooling mode, the air conditioner 10 delivers cold air to the room, and the indoor temperature and local air velocity will change, and accordingly, the draft rating index will also changes.

In an example, the user may set the comfort threshold as needed, and the air conditioner 10 may acquire the current draft rating index and judge whether the corresponding comfort threshold is reached according to the draft rating index. For example, when the draft rating index reaches the comfort threshold, the control apparatus 13 may control the air conditioner 10 to enter the comfort mode.

In some embodiments, the air conditioner 10 includes a temperature sensor 16. For a split type air conditioner, the temperature sensor 16 may be provided in the indoor unit, and the temperature sensor 16 is configured to detect the indoor environmental temperature. The air conditioner 10 may determine the draft rating index according to the corresponding relationship between the environmental temperature and the working state of the air conditioner 10. The corresponding relationship between the environmental temperature and the working state of the air conditioner 10 may be measured in a laboratory and stored in the air conditioner 10.

In an example, when the relationship between the environmental temperature and the working state of the air conditioner 10 is measured in a laboratory, the air conditioner 10 may be controlled to operate in a corresponding mode. For example, the air conditioner 10 may be controlled to operate in a comfort mode. Then, a total of 15 test points are set in the laboratory at 5 five positions, the midpoint of the room facing the air conditioner 10 and the positions of 0.5 m and 1 m on the left and right of the midpoint, at the heights of 0.6 m, 1.1 m , and 1.6 m, respectively. The wind speed and temperature at each test point are detected and the draft rating indexes are calculated accordingly. Thereby, the corresponding relationship between the environmental temperature, the working state of the air conditioner and the draft rating index may be obtained.

When the draft rating index corresponding to the environmental temperature detected by the air conditioner 10 reaches the comfort threshold, the control apparatus 13 controls the air conditioner 10 to enter the comfort mode. The comfort mode of the embodiment of the present disclosure may be subjected to a comfort evaluation by using a quantitative comfort standard (draft rating index), to reduce the user's feeling of cold wind blowing directly to the body in the cooling mode and improve the user's comfort experience.

Of course, in other embodiments, the comfort evaluation is not limited to the above-discussed embodiments, and an appropriate comfort evaluation standard may be selected according to actual needs, and will be specifically defined here.

In some embodiments, the comfort mode includes an anti-direct blowing mode and/or a soft wind mode. The air conditioner control method corresponding to the anti-direct blowing mode and the soft wind mode will be described below respectively.

When the air conditioner 10 runs only in the anti-direct blowing mode or the air conditioner 10 enters the comfort mode for the first time and the air conditioner 10 turns on the direct blowing mode, the air conditioner control method will be described below.

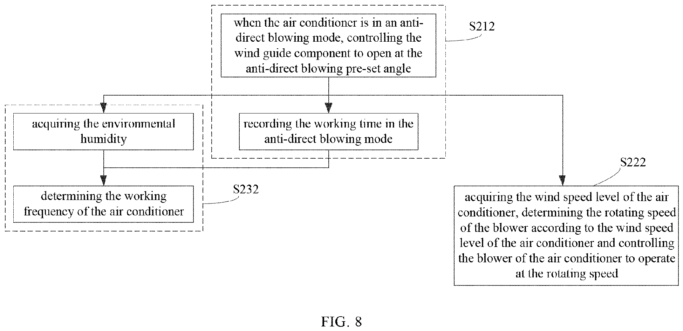

Referring to FIG. 8, in some embodiments, the pre-set angle includes an anti-direct blowing pre-set angle, the system parameter of the air conditioner 10 includes the working time in the anti-direct blowing mode, and the air conditioner control method includes the following step S212, step S222 and step S232.

At step S212, when the air conditioner 10 is in the anti-direct blowing mode, the wind guide component 12 is controlled to open at the anti-direct blowing pre-set angle, and the working time in the anti-direct blowing mode is recorded.

At step 222, the wind speed level of the air conditioner 10 is acquired, the rotating speed of the blower 11 is determined according to the wind speed level and the blower 11 of the air conditioner 10 is controlled to operate at the rotating speed.

At step 232, the environmental humidity is detected, and the working frequency of the air conditioner 10 is determined according to the working time in the anti-direct blowing mode and the environmental humidity.

For the air conditioner 10, step S212, step S222, and step S232 may be implemented by the control apparatus 13. That is to say, the control apparatus 13 may be configured to when the air conditioner 10 is in the anti-direct blowing mode, control the wind guide component 12 to open at the anti-direct blowing pre-set angle, and record the working time in the anti-direct blowing mode; acquire the wind speed level of the air conditioner 10, determine the rotating speed of the blower 11 according to the wind speed level of the air conditioner 10 and control the blower 11 of the air conditioner 10 to operate at the rotating speed; and determine the working frequency of the air conditioner 10 according to the working time in the anti-direct blowing mode and the environmental humidity.

For the air conditioner control method corresponding to the anti-direct blowing mode in the above embodiment, when the air conditioner 10 is in the anti-direct blowing mode, it is possible to adjust the opening angle of the wind guide component 12, the rotating speed of the blower, and adjust the working frequency of the air conditioner 10 according to the environmental humidity and the working time in the anti-direct blowing mode, to reduce the user's feeling of cold wind blowing directly to the body in the cooling mode and improve the user's comfort experience.

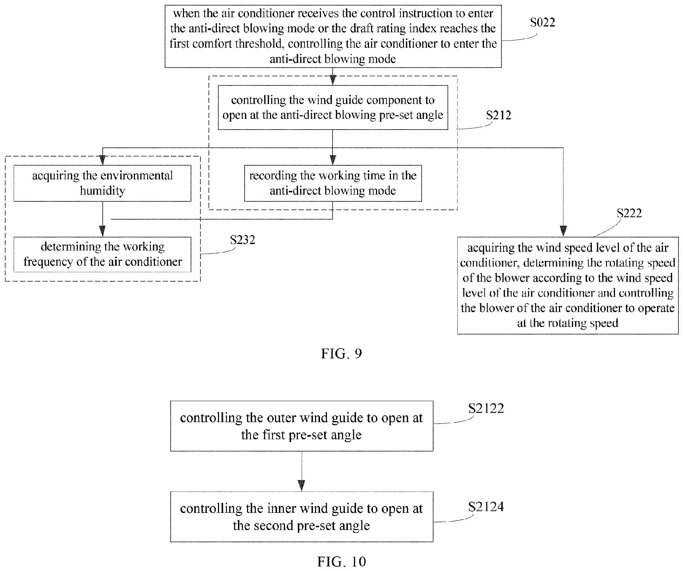

Referring to FIG. 9, in some embodiments, the comfort threshold includes a first comfort threshold, and the air conditioner control method includes the following step S022.

At step S022, when the air conditioner 10 receives a control instruction to enter the anti-direct blowing mode or the draft rating index reaches the first comfort threshold, the air conditioner 10 is controlled to enter the anti-direct blowing mode.

Specifically, step S022 may be implemented by the control apparatus 13. That is to say, the control apparatus 13 may be configured to control the air conditioner 10 to enter the anti-direct blowing mode when the air conditioner 10 receives a control instruction to enter the anti-direct blowing mode or the draft rating index reaches the first comfort threshold.

In an example, the user may input the control instruction through remote control, touch screen, control buttons, mobile phone, gesture and/or voice as needed, to actively control the air conditioner 10 to enter the anti-direct blowing mode. After the air conditioner 10 receives the control instruction to enter the anti-direct blowing mode, the control apparatus 13 controls the air conditioner 10 to enter the anti-direct blowing mode. At this time, the control apparatus 13 starts to record the working time in the anti-direct blowing mode.

In an example, the user may set the first comfort threshold as needed, and the air conditioner 10 may acquire the current draft rating index and judge whether the corresponding first comfort threshold is reached according to the draft rating index. For example, when the draft rating index reaches the first comfort threshold, the control apparatus 13 may control the air conditioner 10 to enter the anti-direct blowing mode.

When the draft rating index corresponding to the environmental temperature detected by the air conditioner 10 reaches the first comfort threshold, the control apparatus 13 controls the air conditioner 10 to enter the anti-direct blowing mode. When the air conditioner 10 is in the anti-direct blowing mode, it is possible to use a quantitative comfort standard (draft rating index) for comfort evaluation, and control the opening angle of the wind guide component 12, the rotating speed of the blower, and the working frequency of the air conditioner 10 to ensure that the draft rating index meets the comfort conditions, to reduce the user's feeling of cold wind blowing directly to the body in the cooling mode, achieving the function of keeping wind away from people, and improve the user's comfort experience. In an example, the first comfort threshold of the anti-direct blowing mode may be 15%.

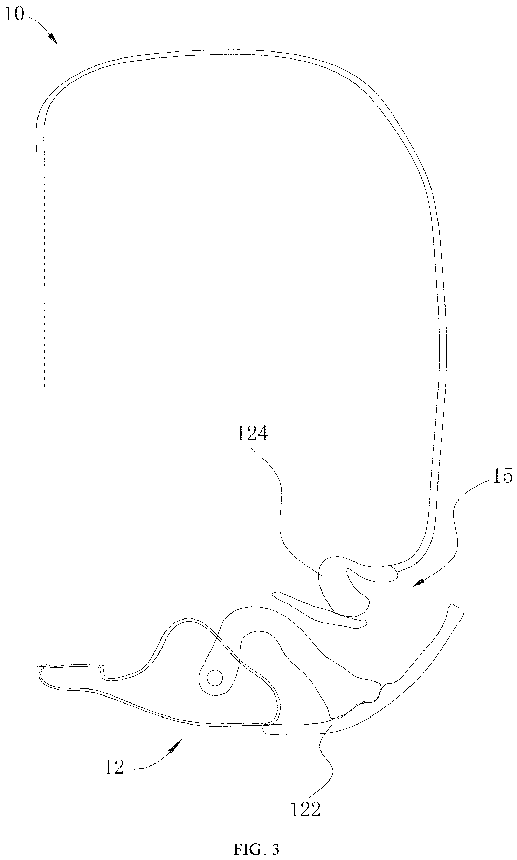

With reference to FIGS. 3 and 10 together, in some embodiments, the wind guide component 12 includes an outer wind guide 122, the anti-direct blowing pre-set angle includes a first anti-direct blowing pre-set angle, and step S212 includes the following step S2122.

At step S2122, when the air conditioner 10 is in the anti-direct blowing mode, the outer wind guide 122 is controlled to open at the first anti-direct blowing pre-set angle.

Specifically, step S2122 may be implemented by the control apparatus 13. That is to say, the control apparatus 13 may be configured to control the outer wind guide 122 to open at the first anti-direct blowing pre-set angle when the air conditioner 10 is in the anti-direct blowing mode. It can be understood that, the air conditioner 10 is usually provided with an air outlet 15 for the air conditioner 10 to deliver cold air to the room. The outer wind guide 122 may be arranged at the air outlet 15. Controlling the opening angle of the outer air guide 122 may control the direction and flow rate of wind from the air conditioner. By adjusting the angle of the outer wind guide 122, the rotating speed of the blower, and the working frequency, it is possible to reduce the user's feeling of cold wind blowing directly to the body in the cooling mode and improve the user's comfort experience.

When the outer wind guide 122 is opened at the first anti-direct blowing pre-set angle, in the anti-direct blowing mode, the problems of condensation and noise may be solved at the same time, improving the user's comfort experience.

Further, in some embodiments, the wind guide component 12 includes an inner wind guide 124, the anti-direct blowing pre-set angle includes a second anti-direct blowing pre-set angle, and step S10 includes the following step S2124.

At step S2124, when the air conditioner 10 is in the anti-direct blowing mode, the inner wind guide 124 is controlled to open to at the second anti-direct blowing pre-set angle.

Specifically, step S2124 may be implemented by the control apparatus 13. That is to say, the control apparatus 13 may be configured to control the inner wind guide 124 to open at the second anti-direct blowing pre-set angle when the air conditioner 10 is in the anti-direct blowing mode. The inner wind guide 124 may be an auxiliary wind guide structure, which is arranged in the air conditioner 10. The inner wind guide 124 and the outer wind guide 122 may cooperate to achieve a better blowing effect. For example, in order to solve the problems of condensation and noise at the same time, the outer wind guide 122 may only be opened at the first anti-direct blowing pre-set angle in the anti-direct blowing mode. In this case, the air conditioner 10 is provided with the inner wind guide 124 to increase the angle at which the cold air blows upwards and achieve a better comfort experience.

Specifically, the wind guide component 12 includes a stepping motor (not shown), and the stepping motor may be configured to drive the wind guide component 12 to rotate. The stepping motor includes a first stepping motor (not shown) and a second stepping motor (not shown). The first stepping motor is configured to drive the outer wind guide 122 to rotate, and the second stepping motor is configured to drive the inner wind guide 124 to rotate.

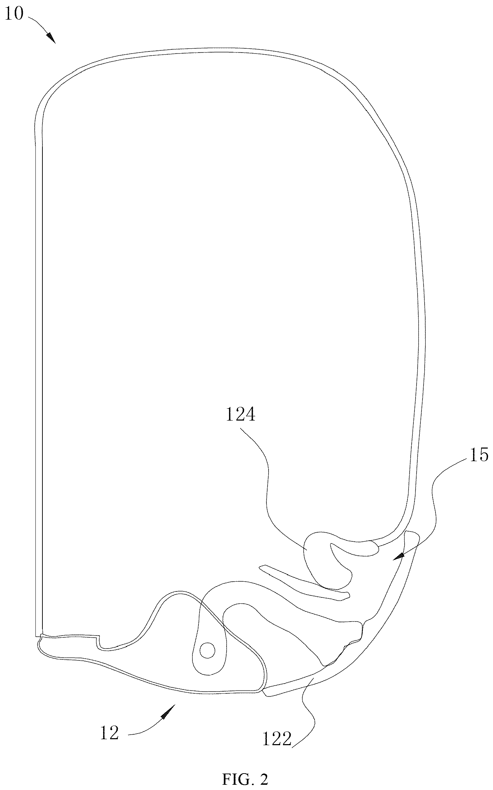

As shown in FIG. 2, when the wind guide component 12 is in the closed state, the outer wind guide 122 blocks the air outlet, the inner wind guide 124 is located in the air conditioner 10. When the outer air guide 122 completely blocks the air outlet, the opening angle of the outer air guide 122 is zero degrees, and when the inner air guide 124 is at the limit angle of inward rotation, the opening angle of the inner air guide 124 is zero degrees. In an example, when the wind guide component 12 is in the closed state, the opening angle of the outer wind guide 122 is zero degrees, and the opening angle of the inner wind guide 124 is 15 degrees.

In some embodiments, the outer wind guide 122 is provided with an array of air holes (not shown). In this way, when the wind guide component 12 is in the closed state, the air conditioner 10 may delivery air through the array of air holes. When the outer wind guide 122 is opened, the first stepping motor drives the outer wind guide 122 to rotate so that the outer wind guide 122 is opened at a certain angle, thereby adjusting the air supply angle of the air conditioner 10.

Further, when the inner wind guide 124 is opened, the second stepping motor may drive the inner wind guide 124 to rotate, so that the inner wind guide 124 rotates outwards to further adjust the air supply angle of the air conditioner 10.

In an example, when the air conditioner 10 is in the anti-direct blowing mode, the first anti-direct blowing pre-set angle is 40 degrees, and the second anti-direct blowing pre-set angle is 15 degrees.

Specifically, when the wind guide component 12 is opened from the closed state, the first stepping motor rotates 140 degrees and drives the outer wind guide 122 to rotate 40 degrees outward so that the outer wind guide 122 is opened at the first anti-direct blowing pre-set angle, the inner wind guide 124 is kept open at 15 degrees so that the inner wind guide 124 is opened at the second anti-direct blowing pre-set angle. In some embodiments, the air conditioner 10 may omit the inner wind guide 124.

Of course, in other embodiments, the first anti-direct blowing pre-set angle and the second anti-direct blowing pre-set angle are not limited to the above-discussed embodiments, and can be flexibly configured as required.

In some embodiments, the wind speed level is calculated according to an automatic wind rule of the air conditioner 10, or determined according to a user setting.

It may be understood that the air delivery rate of the air conditioner 10 is related to the wind speed level of the blower 11. Under different wind speed levels, the rotating speed of the blower 11 is different. The air conditioner 10 may calculate the wind speed level of the blower 11 according to the automatic wind rule, and then calculate the rotating speed of the blower 11. The wind speed level may be 1%-100%.

Specifically, in an example, the wind speed level is calculated according to the automatic wind rule of the air conditioner 10. During the operation of the air conditioner 10, the user can set the set temperature, and the automatic wind rule may use the set temperature and the current environmental temperature for calculation. The relationship between the difference between the set temperature and the current environmental temperature and the set value is determined to calculate the wind speed level needed during the operation based on the current wind speed level. For example, when the current operating wind speed level is 80%, if the difference between the set temperature and the current environmental temperature meets the condition that (environmental temperature-set temperature) is greater than 2°C, the wind speed level is reduced to 60%.

In another example, the wind speed level is determined according to a user setting. The user can set the wind speed level in the anti-direct blowing mode. When the air conditioner 10 is in the anti-direct blowing mode, the wind speed level of blower 11 is defaulted at the wind speed level set by the user. Of course, when the user selects the anti-direct blowing mode by inputting a control instruction, the corresponding wind speed level may be set every time in the input control instruction.

It should be noted that for the same wind speed level in different mode, the rotating speed of the blower 11 may be different.

In some embodiments, when the air conditioner 10 is in the anti-direct blowing mode, the rotating speed of the blower 11 is related to maximum blower rotating speed and the minimum blower rotating speed, the maximum wind speed level and the wind speed level of the air conditioner 10 in the anti-direct blowing mode.

Specifically, the minimum blower rotating speed in the anti-direct blowing mode is greater than the minimum blower rotating speed in the normal mode, and the maximum blower rotating speed in the anti-direct blowing mode is less than or equal to the maximum blower rotating speed in the normal mode.

When the air conditioner 10 is in the normal mode, the speed of the blower 11 may be calculated according to the following conditional formula:

$$W = (W_{0}\_max - W_{0}\_min)/Lv\_max \cdot Lv + W_{0}\_min;$$

where, W is the rotating speed of the blower 11; $W_{0}\_max$ is the maximum blower rotating speed in the normal mode; $W_{0}\_min$ is the minimum blower rotating speed in the normal mode, Lv_max is the maximum wind speed level in the normal mode; Lv is the wind speed level.

When the air conditioner 10 is in the anti-direct blowing mode, the rotating speed of the blower 11 may be calculated using the minimum blower rotating speed in the anti-direct blowing mode instead of the minimum blower rotating speed in the normal mode, and using the maximum blower rotating speed in the anti-direct blowing mode instead of the maximum blower rotating speed in the normal mode. That is to say, when the air conditioner 10 is in the anti-direct blowing mode, the rotating speed of the blower 11 may be calculated according to the following conditional formula:

$$W = (W_1\_max - W_1\_min)/Lv\_max \cdot Lv + W_1\_min$$

where, $W_1\_max$ is the maximum blower rotating speed in the anti-direct blowing mode; $W_1\_min$ is the minimum blower rotating speed in the anti-direct blowing mode. The maximum wind speed level in the normal mode and the maximum wind speed level in the anti-direct blowing mode are the same, that is, $Lv\_max=100\%$.

In an example, the maximum blower rotating speed in the normal mode may be 1000 revolutions per second (rps), the minimum blower rotating speed in the normal mode may be 500 rps, the maximum blower rotating speed in the anti-direct blowing mode may be 1000 rps, and the minimum blower rotating speed in the anti-direct blowing mode may be 650 rps. In this way, whether it is an automatically calculated wind speed level or a user set wind speed level, compared to the normal mode, the air conditioner 10 may increase the actual blower rotating speed corresponding to each level in the anti-direct blowing mode to ensure the cooling capacity of the air conditioner 10 in the anti-direct blowing mode.

In some embodiments, the air conditioner 10 is preset with a corresponding relationship between the working time, the environmental humidity, and the operating frequency, including a first corresponding relationship. Step S232 includes: determining the working frequency of the air conditioner 10 according to the working time, the environmental humidity, and the first corresponding relationship.

The first corresponding relationship between the working time, the environmental humidity and the operating frequency may be pre-stored in the control apparatus 13 in the form of a look-up table. When the air conditioner 10 enters the anti-direct blowing mode, the control apparatus 13 may find the corresponding operating frequency from the look-up table according to the working time and the environmental humidity and control the air conditioner 10 to operate at the corresponding operating frequency

Specifically, the first corresponding relationship between the working time, the environmental humidity, and the working frequency is shown in Table 1 below:

[Table 1]

| Working time (min) | Environmental humidity (%) | Maximum operating frequency (Hz) |
|---|---|---|
| 0≤Time< 10 | Arbitrary | Unlimited frequency |
| 10<Time<30 | Hucr> 80 | 44 |
| 10<Time<30 | 75 <Hucr≤80 | 49 |
| 10<Time<30 | 70 < Hucr≤75 | 60 |
| 10<Time<30 | 60 < Hucr≤70 | 72 |
| 10<Time<30 | Hucr≤60 | Unlimited frequency |
| 30≤Time<45 | Hucr> 80 | 33 |
| 30≤Time<45 | 75 <Hucr≤80 | 39 |
| 30≤Time<45 | 70 < Hucr≤75 | 48 |
| 30≤Time<45 | 60 < Hucr≤70 | 62 |
| 30≤Time<45 | Hucr≤60 | Unlimited frequency |
| 45≤Time<60 | Hucr> 80 | 22 |
| 45≤Time<60 | 75 <Hucr≤80 | 28 |
| 45≤Time<60 | 70 < Hucr≤75 | 38 |
| 45≤Time<60 | 60 < Hucr≤70 | 55 |

In an example, the air conditioner 10 includes a compressor 17, and the working frequency of the air conditioner 10 may refer to the operating frequency of the compressor 17. When the air conditioner 10 is in the anti-direct blowing mode, the working frequency of the air conditioner 10 does not exceed the maximum operating frequency corresponding to the first corresponding relationship between the working time, the environmental humidity, and the operating frequency.

In some embodiments, the first corresponding relationship between the working time, the environmental humidity and the operating frequency is: under the same environmental humidity, the longer the working time of the air conditioner 10 in the anti-direct blowing mode, the lower the working frequency of the air conditioner 10; in the same working time of the air conditioner 10 in the anti-direct blowing mode, the higher the environmental humidity detected by the air conditioner 10, the lower the working frequency of the air conditioner 10.

It may be understood that the longer the working time for the air conditioner 10 in anti-direct blowing mode, the longer the cooling time of the air conditioner 10, and accordingly, the closer the environmental temperature to the set temperature input by the user. Therefore, the working frequency of the air conditioner 10 may be appropriately reduced to reduce the energy loss while ensuring the cooling capacity.

In addition, water vapor in the air will form condensation when it encounters cold objects. When the air conditioner 10 producing cooling, the conditions for the cold air transported to the room to form condensation are related to the temperature of the cold air and the indoor environmental humidity. The greater the environmental humidity and the lower the temperature of the cold wind, the higher the possibility of condensation. Therefore, when it is detected that the environmental humidity is relatively high, the working frequency of the air conditioner 10 may be appropriately reduced to ensure the cooling capacity of the air conditioner 10 and reduce the risk of condensation.

In this way, the air conditioner 10 may jointly adjust the angle of the wind guide component 12, the rotating speed of the blower, the working frequency, the environmental humidity and the working time, etc., to ensure the cooling capacity of the air conditioner 10, prevent the risk of condensation, and reduce the user's feeling of cold wind blowing directly to the body in the cooling mode and improve the user's comfort experience.

When the air conditioner 10 runs only in the anti-direct blowing mode or the air conditioner 10 enters the comfort mode for the first time and the air conditioner 10 turns on the direct blowing mode, the corresponding control method of the air conditioner 10 will be described below:

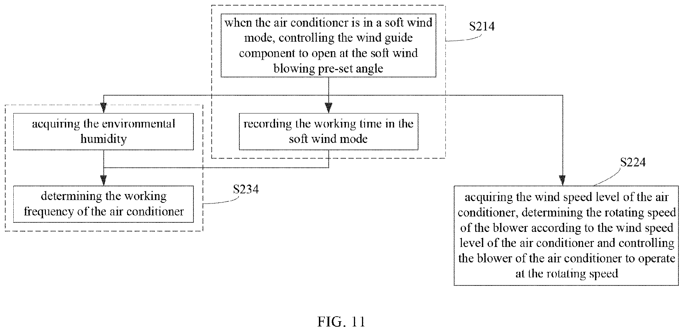

Referring to FIG. 11, in some embodiments, the air conditioner control method in the soft wind mode is similar to the air conditioner control method in the anti-direct blowing mode. Specifically, the pre-set angle includes a soft wind pre-set angle, and the control method of air conditioner includes the following step S214, step S224 and step S234.

At step S214, when the air conditioner 10 is in the soft wind mode, the wind guide component 12 is controlled to open at the soft wind pre-set angle, and the working time in the soft wind mode is recorded.

At step 224, the wind speed level of the air conditioner 10 is acquired, the rotating speed of the blower 11 is determined according to the wind speed level and the blower 11 of the air conditioner 10 is controlled to operate at the rotating speed.

At step 234, the environmental humidity is detected, and the working frequency of the air conditioner 10 is determined according to the working time in the soft wind mode and the environmental humidity.

For the air conditioner 10, step S214, step S224, and step S234 may be implemented by the control apparatus 13. That is to say, the control apparatus 13 may be configured to when the air conditioner 10 is in the soft wind mode, control the wind guide component 12 to open at the soft wind pre-set angle, and record the working time in the soft wind mode; acquire the wind speed level of the air conditioner 10, determine the rotating speed of the blower 11 according to the wind speed level of the air conditioner 10 and control the blower 11 of the air conditioner 10 to operate at the rotating speed; and determine the working frequency of the air conditioner 10 according to the working time in the soft wind mode and the environmental humidity.

The difference between the air conditioner control method in the soft wind mode and the air conditioner control method in the anti-direct blowing mode is that the opening angle of the wind guide component 122 is different, and the calculation method of the rotating speed of the blower is different

For the air conditioner control method of the above embodiments, when the air conditioner 10 is in the soft wind mode, it is possible to adjust the opening angle of the wind guide component 12, the rotating speed of the blower, and adjust the working frequency of the air conditioner 10 according to the environmental humidity and the working time in the soft wind mode, softening the sense of wind to reduce the user's feeling of cold wind blowing directly to the body in the cooling mode and improve the user's comfort experience.

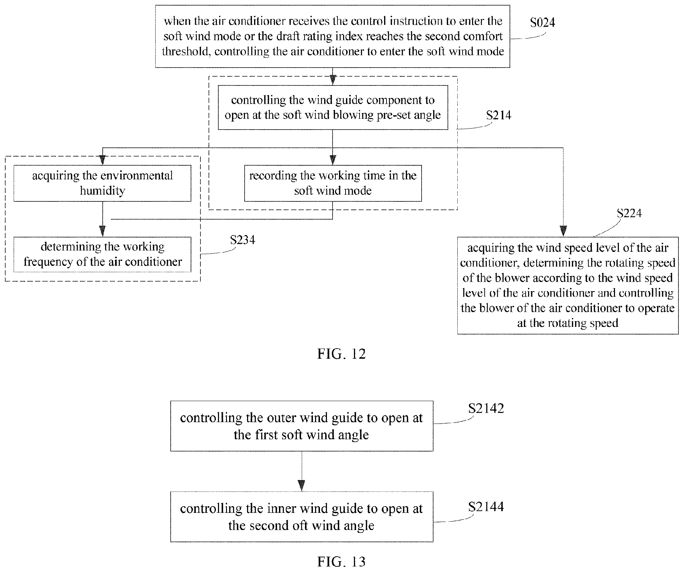

Referring to FIG. 12, specifically, in some embodiments, the comfort threshold includes a second comfort threshold, and the air conditioner control method includes the following step S024.

At step S024, when the air conditioner 10 receives a control instruction to enter the soft wind mode or the draft rating index reaches the second comfort threshold, the air conditioner 10 is controlled to enter the soft wind mode

Specifically, step S024 may be implemented by the control apparatus 13. That is to say, the control apparatus 13 may be configured to control the air conditioner 10 to enter the soft wind mode when the air conditioner 10 receives a control instruction to enter the soft wind mode or the draft rating index reaches the second comfort threshold.

Correspondingly, the user may input the control instruction through remote control, touch screen, control buttons, mobile phone, gesture and/or voice as needed, to actively control the air conditioner 10 to enter the soft wind mode After the air conditioner 10 receives the control instruction to enter the soft wind mode, the control apparatus 13 controls the air conditioner 10 to enter the soft wind mode. At this time, the control apparatus 13 starts to record the working time in the soft wind mode

In an example, the user may set the second comfort threshold as needed, and the air conditioner 10 may acquire the current draft rating index and judge whether the second comfort threshold is reached according to the draft rating index. If the draft rating index reaches the second comfort threshold, the control apparatus 13 may control the air conditioner 10 to enter the soft wind mode The second comfort threshold is less than the first comfort threshold

When the air conditioner 10 is in the soft wind mode, it is possible to use a quantitative comfort standard (draft rating index) for comfort evaluation, and control the opening angle of the wind guide component 12, the rotating speed of the blower, and the working frequency of the air conditioner 10 to ensure that the draft rating index meets the comfort conditions, softening the sense of wind to reduce the user's feeling of cold wind blowing directly to the body in the cooling mode, achieving the function of keeping wind away from people, and improve the user's comfort experience. In an example, the second comfort threshold of the soft wind mode may be 10%.

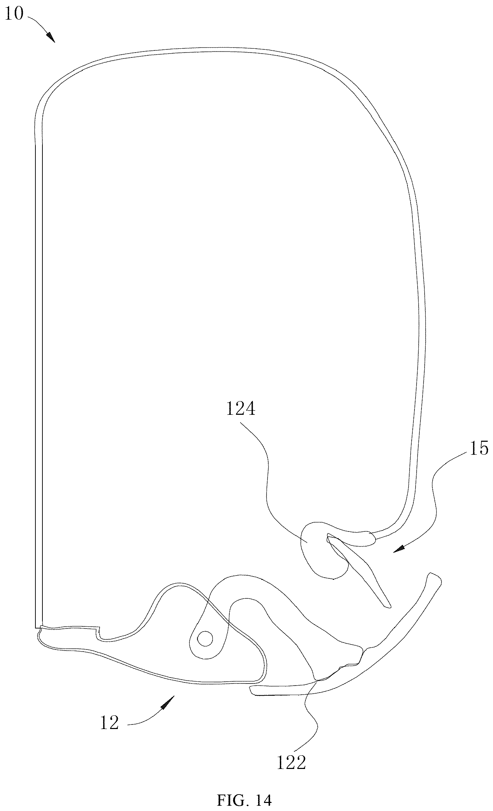

With reference to FIG. 13 and FIG. 14 together, in some embodiments, the soft wind pre-set angle includes a first soft wind pre-set angle, and step S214 includes the following step S2144.

At step S2142, when the air conditioner 10 is in the soft wind mode, the outer wind guide 122 is controlled to open at the first soft wind pre-set angle.

Specifically, step S2142 may be implemented by the control apparatus 13. That is to say, the control apparatus 13 may be configured to control the outer wind guide 122 to open at the first soft wind pre-set angle when the air conditioner 10 is in the soft wind mode. When the outer wind guide 122 is opened at the first soft wind pre-set angle in the soft wind mode, the problems of condensation and noise may be solved at the same time, improving the user's comfort experience.

In some embodiments, the soft wind pre-set angle includes a second soft wind pre-set angle, and step S214 includes the following step S2144.

At step S2144, when the air conditioner 10 is in the soft wind mode, the inner wind guide 124 is controlled to open at the fourth pre-set angle.

Specifically, step S2144 may be implemented by the control apparatus 13. That is to say, the control apparatus 13 may be configured to control the inner wind guide 124 to open at the second soft wind pre-set angle when the air conditioner 10 is in the soft wind mode. The cooperation of the inner wind guide 124 and the outer wind guide 122 may achieve a better wind delivery effect.

In an example, when the air conditioner 10 is in the soft wind mode, the first soft wind pre-set angle is 40 degrees, and the second soft wind pre-set angle is 188 degrees.

Specifically, when the wind guide component 12 is opened from the closed state, the first stepping motor rotates 140 degrees and drives the outer wind guide 122 to rotate 40 degrees outward so that the outer wind guide 122 is opened at the first soft wind pre-set angle, the inner wind guide 124 rotates 173 degrees and drives the inner wind guide to open from 15 degrees to the second soft wind pre-set angle.

Of course, in other embodiments, the first soft wind pre-set angle and the second soft wind pre-set angle are not limited to the above-discussed embodiments, and may be flexibly configured as required.

In some embodiments, when the air conditioner 10 is in the soft wind mode, the rotating speed of the blower 11 is related to the maximum blower rotating speed and the minimum blower rotating speed, and the maximum wind speed level and wind speed level of the air conditioner 10 in the soft wind mode.

Specifically, the minimum blower rotating speed in the soft wind mode is greater than the minimum blower rotating speed in the normal mode, and the maximum blower rotating speed in the soft wind mode is less than or equal to the maximum blower rotating speed in the normal mode.

When the air conditioner 10 is in the soft wind mode, the rotating speed of the blower 11 may be calculated according to the following conditional formula:

$$W = (W_{2\_}\text{max} - W_{2\_}\text{min})/\text{Lv\_max} \cdot \text{Lv} + W_{2\_}\text{min};$$

where, $W_{2\_}$max is the maximum blower rotating speed in the soft wind mode; $W_{2\_}$min is the minimum blower rotating speed in the soft wind mode. The maximum wind speed level in the normal mode and the maximum wind speed level in the soft wind mode are the same, that is, Lv_max=100%. Lv is the wind speed level.

In an example, the maximum blower rotating speed in the normal mode may be 1000 rps, the minimum blower rotating speed in the normal mode may be 500 rps, the maximum blower rotating speed in the soft wind mode may be 900 rpm, and the minimum blower rotating speed in the soft wind mode may be 650 rps. In this way, compared to the normal mode, in the soft wind mode, the rotating speed of the blower corresponding to a lower wind speed level is increased, while the rotating speed of the blower corresponding to a higher wind speed level is reduced. Cooperating with the wind guide component 12, it is beneficial to ensure the cooling capacity of the air conditioner 10 in the soft wind mode, and at the same time, it can soften the sense of wind and improve the user's comfort experience.

It should be noted that the method for determining the wind speed level in the soft wind mode may be the same as the method for determining the wind speed level in the anti-direct blowing mode, and will not be detailed here.

In some embodiments, the air conditioner 10 is preset with a corresponding relationship between the working time, the environmental humidity, and the operating frequency, including a second corresponding relationship. Step 70 includes: determining the working frequency of the air conditioner 10 according to the working time, the environmental humidity, and the second corresponding relationship.

Specifically, the second corresponding relationship may be the same as or different from the first corresponding relationship. When the second corresponding relationship is different from the first corresponding relationship, the maximum operating frequency of the air conditioner 10 in the soft wind mode may be less than the maximum operating frequency in the anti-direct blowing mode under the same working time and temperature conditions.

In some embodiments, the second corresponding relationship between the working time, the environmental humidity, and the operating frequency is: under the same environmental humidity, the longer the working time of the air conditioner 10 in the soft wind mode, the lower the corresponding working frequency; in the same working time, the higher the environmental humidity detected by the air conditioner 10, the lower the corresponding working frequency.

Similarly, the air conditioner 10 may jointly adjust the angle of the wind guide component 12, the rotating speed of the blower, the working frequency, the environmental humidity and the working time, etc., to ensure the cooling capacity of the air conditioner 10, prevent the risk of condensation, and soften the sense of wind to reduce the user's feeling of cold wind blowing directly to the body in the cooling mode and improve the user's comfort experience.

It should be noted that the first anti-direct blowing pre-set angle and the first soft wind pre-set angle are the first pre-set angle of the embodiment of the present disclosure, and the second anti-direct blowing pre-set angle and the second soft wind pre-set angle are the second pre-set angle of the embodiment of the present disclosure. When the air conditioner 10 is in the anti-direct blowing mode, the first pre-set angle may correspond to the first anti-direct blowing pre-set angle, and the second pre-set angle may correspond to the second anti-direct blowing pre-set angle; when the air conditioner 10 is in the soft wind mode, the first pre-set angle may correspond to the first soft wind pre-set angle, and the second pre-set angle may correspond to the second soft wind pre-set angle.

In some embodiments, the air conditioner 10 may be switched between the anti-direct blowing mode and the soft wind mode. In other words, the air conditioner 10 may be switched from the anti-direct blowing mode to the soft wind mode, or from the soft wind mode to the anti-direct blowing mode.

Specifically, the user may input an anti-direct blowing control instruction or a soft wind control instruction as needed to control the air conditioner 10 to switch between the anti-direct blowing mode and the soft wind mode. Alternatively, the air conditioner 10 automatically controls the switching of the air conditioner 10 between the direct blowing mode and the soft wind mode according to the relationship between the draft rating index and the first comfort threshold and the second comfort threshold.

In an example, when the air conditioner 10 is switched from the anti-direct blowing mode to the soft wind mode, the control apparatus 13 is configured to open the wind guide component 12 from the anti-direct blowing pre-set angle to the soft wind pre-set angle. The rotating speed of the blower is calculated according to the rotating speed of the blower in the soft wind mode, where the wind speed level after switching is equal to the wind speed level before switching to ensure that the air conditioner 10 has continuous wind speed control when the operation mode is switched. The working frequency of the air conditioner 10 is determined according to the environmental humidity, the working time in the comfort mode, and the second corresponding relationship.

The working time in the comfort mode recorded by the control apparatus 13 is the total time of the air conditioner 10 in the anti-direct blowing mode and in the soft wind mode. The working time after switching will continue to be calculated from the working time before switching, that is, when switching between the anti-direct blowing mode and the soft wind mode, the working time in the comfort mode does not need to be recalculated to ensure the continuity of the control time of the air conditioner 10.

Correspondingly, in another example, when the air conditioner 10 is switched from the soft wind mode to the anti-direct blowing mode, the control apparatus 13 is configured to open the wind guide component 12 from the soft wind pre-set angle to the anti-direct blowing pre-set angle. The rotating speed of the blower is calculated according to the rotating speed of the blower in the anti-direct blowing mode, wherein the wind speed level after switching is equal to the wind speed level before switching to ensure that the air conditioner 10 has continuous wind speed control when the operation mode is switched. The working frequency of the air conditioner 10 is determined according to the environmental humidity, the working time in the comfort mode, and the second corresponding relationship.

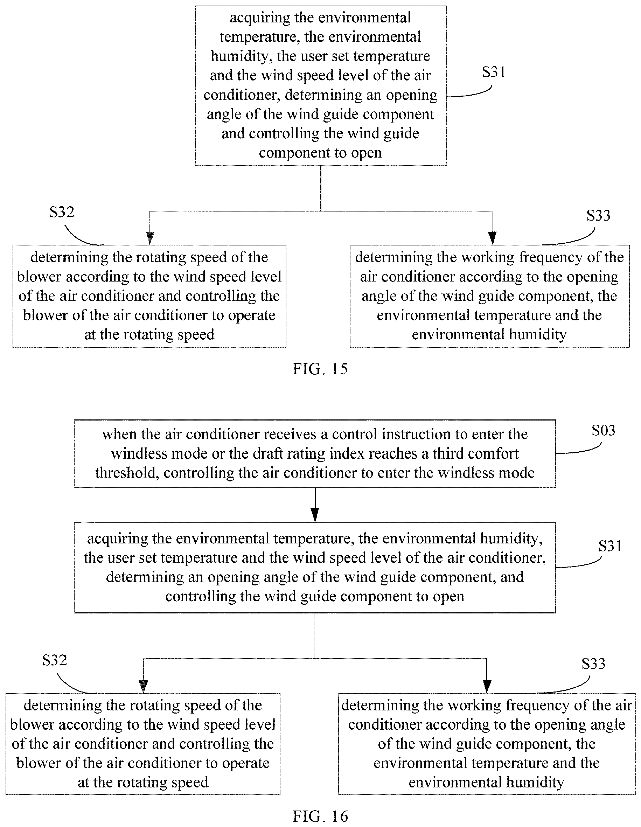

Referring to FIG. 15, in another embodiment of the present disclosure, the air conditioner 10 may also be operated in a windless mode. In the windless mode, the environmental parameter of the air conditioner 10 includes the environmental temperature and the environmental humidity, and the system parameter of the air conditioner 10 includes the user set temperature and the wind speed level of the air conditioner 10. Step S30 includes the following step S31, step S32 and step S33.

At step S31, when the air conditioner 10 is in the windless mode, the environmental temperature, the environmental humidity, the user set temperature, and the wind speed level of the air conditioner 10 are acquired, the opening angle of the wind guide component 12 is determined according to the environmental temperature, the environmental humidity and the user set temperature, and the wind guide component 12 is controlled to open at the opening angle of the wind guide component 12.

At step S32, the rotating speed of the blower 11 is determined according to the wind speed level of the air conditioner 10, and the blower 11 of the air conditioner 10 is control to operate at the rotating speed.

At step S33, the working frequency of the air conditioner 10 is determined according to the opening angle of the wind guide component 12, the environmental temperature and the environmental humidity.

For the air conditioner 10, step S31, step S32, and step S33 may be implemented by the control apparatus 13. That is to say, the control apparatus 13 may be configured to when the air conditioner 10 is in the windless mode, acquire the environmental temperature, the environmental humidity and the user set temperature, determine the opening angle of the wind guide component 12 according to the environmental temperature, the environmental humidity and the user set temperature, and control the wind guide component 12 to open at the opening angle of the wind guide component 12; determine the rotating speed of the blower 11 according to the wind speed level of the air conditioner 10, and control the blower 11 of the air conditioner 10 to operate at the rotating speed; and determine the working frequency of the air conditioner 10 according to the opening angle of the wind guide component 12, the environmental temperature and the environmental humidity.

In the windless mode, when the air conditioner 10 is in the windless mode, it is possible to adjust the opening angle of the wind guide component 12, the rotating speed of the blower, and adjust the working frequency of the air conditioner 10 according to the user's set temperature, the environmental temperature and the environmental humidity, to reduce the direct blowing of cold air to the user's body in the cooling mode, and improve the user's comfort experience.

Referring to FIG. 16, in some embodiments, the air conditioner control method includes the following step S03.

At step S03, when the air conditioner 10 receives a control instruction to enter the windless mode or the draft rating index reaches a third comfort threshold, the air conditioner 10 is controlled to enter the windless mode.

Specifically, step S03 may be implemented by the control apparatus 13. That is to say, the control apparatus 13 may be configured to control the air conditioner 10 to enters the windless mode when the air conditioner 10 receives a control instruction to enter the windless mode or the draft rating index reaches the third comfort threshold.

In an example, the user may input the control instruction through remote control, touch screen, control buttons, mobile phones, gestures or voices as needed to actively control the air conditioner 10 to enter the windless mod. After the air conditioner 10 receives the control instruction to enter the windless mode, the control apparatus 13 controls the air conditioner 10 to enter the windless mode.

In an example, the user may set the third comfort threshold as needed, and the air conditioner 10 may acquire the current draft rating index and judge whether the third comfort threshold is reached according to the draft rating index. If the draft rating index reaches the third comfort threshold, the control apparatus 13 may control the air conditioner 10 to enter the windless mode. The third comfort threshold is less than the second comfort threshold, and the second comfort threshold is less than the first comfort threshold.

The windless mode of the embodiment of the present disclosure may be subjected to a comfort evaluation by using a quantitative comfort standard (draft rating index). When the air conditioner 10 is in the windless mode, it is possible to adjust different opening angles of the wind guide component 12, different blower rotating speed and different working frequencies to reduce the direct blowing of cold air to the user's body in the cooling mode, obtain a better comfort evaluation and improve the user's comfort experience. Specifically, the third comfort threshold of the windless mode may be 5%.

Specifically, in step S32, the control apparatus 13 may be configured to open the wind guide component 12 at a windless pre-set angle. The windless pre-set angle includes at least two different pre-set angles.

In some embodiments, the windless pre-set angle includes a first windless pre-set angle, and step S32 includes: when the air conditioner 10 is in a windless mode, and the environmental temperature is greater than the first pre-set temperature and the first set temperature, and the environmental humidity is not less than the first pre-set humidity, controlling the outer wind guide 122 to open at the first windless pre-set angle.

Specifically, the above step may be implemented by the control apparatus 13. That is to say, the control apparatus 13 may be configured to control the outer wind guide 122 to open at the first windless pre-set angle when the environmental temperature is greater than the first pre-set temperature and the first set temperature, and the environmental humidity is not less than the first pre-set humidity. The air conditioner 10 may judge the indoor environment according to the environmental temperature, the environmental humidity and the user's set temperature. By adjusting the opening angle of the outer wind guide 122, the rotating speed of the blower, and the working frequency, the blowing sensation in the cooling mode is reduced and the user's comfort experience is improved. The first set temperature may be determined by the user set temperature and an adjustment value.

In an example, the first pre-set temperature may be 30°C, the first set temperature may be the sum of the user set temperature value ( such as + 2°C) and the adjustment value, the first preset humidity may be 70%, and the first windless pre-set angle may be 40 degrees. When the outer wind guide 122 satisfies the conditions for opening at the first windless pre-set angle, if the environmental temperature and humidity are relatively high, then the outer wind guide 122 may be opened at a larger angle. When the outer wind guide 122 is opened at the first windless pre-set angle, in the windless mode, the problems of condensation and noise may be solved at the same time, ensuring the cooling capacity of the air conditioner.

In some implementations, the windless pre-set angle includes a second windless pre-set angle, and step S32 includes: when the air conditioner is in a windless mode, and the environmental temperature is not greater than the second pre-set temperature, or the environmental temperature is not greater than the second set temperature, or the environmental humidity is not greater than the second pre-set humidity, controlling the outer wind guide 122 to open at the second wind less pre-set angle.

Specifically, the above step may be implemented by the control apparatus 13. That is to say, the control apparatus 13 may be configured to control the outer wind guide 122 to open at the second windless pre-set angle when the air conditioner is in a windless mode, and the environmental temperature is not greater than the second pre-set temperature, or the environmental temperature is not greater than the second set temperature, or the environmental humidity is not greater than the second pre-set humidity. The air conditioner 10 may judge the indoor environment according to the environmental temperature, the environmental humidity and the user's set temperature. By adjusting the opening angle of the outer wind guide 122, the rotating speed of the blower, and the working frequency, the blowing sensation in the cooling mode is reduced and the user's comfort experience is improved.

The second set temperature may be determined according to the user set temperature, the second pre-set temperature is less than the first pre-set temperature, the second set temperature is less than the first set temperature, and the second pre-set humidity is greater than the first pre-set humidity.

In an example, the second pre-set temperature may be 28°C, the second set temperature may be the set temperature, the second pre-set humidity may be 60%, and the second windless pre-set angle may be zero degrees. In this way, when the outer wind guide 122 satisfies the condition for opening at the second windless pre-set angle, if the temperature and/or relative humidity of the indoor environment is low, the air conditioner 10 may control the outer wind guide 122 to open at the second windless pre-set angle, that is, the outer wind guide 122 is closed. The air conditioner 10 sends air into the room through the air holes to ensure a windless experience and reduce the draft rating index.

In some embodiments, the air conditioner control method includes: when the air conditioner 10 enters the windless mode, opening the outer wind guide 122 at a default angle by default, and then entering step S32.

In other words, when the air conditioner 10 enters the windless mode, the outer wind guide 122 is opened at a default angle by default. Then, the control device 13 determines whether the outer air guide 122 satisfies the condition for opening at the first windless preset angle or the second windless preset angle according to the environmental temperature, the environmental humidity and the user set temperature, and controls the outer air guide 122 to open at the first windless pre-set angle or the second windless pre-set angle. In particular, the default angle may be the first windless pre-set angle.

In an example, if the outer wind guide 122 does not meet the condition for opening at the first windless pre-set angle or the second windless pre-set angle, the outer wind guide 122 is controlled to remain at the default angle. For example, if the environmental temperature is greater than the second pre-set temperature and less than the first pre-set temperature, or the environmental temperature is greater than the second set temperature and less than the first set temperature, or the environmental humidity is greater than the second pre-set humidity and less than the first pre-set humidity, then the outer wind guide 122 does not meet the condition for opening at the first windless pre-set angle or the second windless pre-set angle, and the control apparatus 13 may control the outer wind guide 122 to maintain the default angle.

The air conditioner 10 may detect the environmental temperature and the environmental humidity in real time, so as to adjust the opening angle of the wind guide component 12 in real time. When the outer wind guide 122 is opened at one of the first windless pre-set angle or the second windless pre-set angle, and the air conditioner 10 has operated in the windless mode for a period of time, if the environmental temperature and the environmental humidity change so that the outer air guide 122 does not meet the aforementioned conditions for opening at the first windless pre-set angle or the second windless pre-set angle, the outer air guide 122 will maintains the current angle.

For example, after the air conditioner 10 controls the outer wind guide 122 to open at the first windless pre-set angle and has operated for a period of time, if the environmental temperature and the environmental humidity change so that the outer wind guide 122 does not satisfy the aforementioned conditions for opening at the first windless pre-set angle or for opening at the second windless pre-set angle, the outer wind guide 122 will maintains the first windless pre-set angle.

Correspondingly, after the air conditioner 10 controls the outer wind guide 122 to open at the second windless pre-set angle and has operated for a period of time, if the environmental temperature and the environmental humidity change so that the outer wind guide 122 does not satisfy the aforementioned conditions for opening at the first windless pre-set angle or for opening at the second windless pre-set angle, the outer wind guide 122 will maintains the second windless pre-set angle.

In some embodiments, the windless pre-set angle sensation includes a third windless pre-set angle, and step S100 includes: when the air conditioner 10 is in the windless mode, controlling the inner wind guide 124 to open at the third windless pre-set angle.

Specifically, the above steps may be implemented by the control apparatus 13. That is to say, the control apparatus 13 may be configured to control the inner wind guide 124 to open at the third windless pre-set angle when the air conditioner 10 is in the windless mode. In an example, the third windless pre-set angle may be 30 degrees.

In this way, in the case that there is no positional interference between the outer wind guide 122 and the inner wind guide 124, when the air conditioner 10 is in the windless mode, the inner wind guide 124 may be fixed to an angle, and the control device 13 only needs to determine the opening angle of the outer air guide 122.

In some embodiments, the windless pre-set angle includes a fourth windless pre-set angle, and step S32 includes: when the outer wind guide 122 is opened at the first windless pre-set angle, controlling the inner wind guide 124 to open at the fourth windless pre-set angle.

Specifically, the above steps may be implemented by the control apparatus 13. That is to say, the control apparatus 13 may be configured to control the inner wind guide 124 to open at the fourth windless pre-set angle when the outer wind guide 122 is opened at the first windless pre-set angle. The cooperation of the inner wind guide 124 and the outer wind guide 122 may achieve a better air delivery effect. In an example, the second windless pre-set angle may be 188 degrees.

In some embodiments, the windless pre-set angle includes a fifth windless pre-set angle, and step S32 includes: when the outer wind guide 122 is opened at the second windless pre-set angle, controlling the inner wind guide 124 to open at the fifth windless pre-set angle.

Specifically, the above steps may be implemented by the control apparatus 13. That is to say, the control apparatus 13 may control the inner wind guide 124 to open at the fifth windless pre-set angle when the outer wind guide 122 is opened at the second windless pre-set angle. The cooperation of the inner wind guide 124 and the outer wind guide 122 may achieve a better air delivery effect. In an example, the fifth windless pre-set angle may be 15 degrees. In other words, the inner wind guide 124 may be in a closed state.

It should be noted that the first windless pre-set angle, the second windless pre-set angle, the default angle, the third windless pre-set angle, the fourth windless pre-set angle, and the fifth windless pre-set angle may not be limited to the embodiments discussed above, but may be flexibly configured according to actual needs.

It should be particularly noted that in the above embodiment, when the air conditioner 10 is in the windless mode, the first pre-set angle in the claims corresponds to the first windless pre-set angle, and the second pre-set angle in the claims corresponds to the second windless pre-set angle, and the third pre-set angle in the claims corresponds to the third windless pre-set angle.

In some embodiments, the wind speed level is calculated according to the automatic wind rule and the wind speed adjustment coefficient of the air conditioner 10, or calculated according to the wind speed level and the wind speed adjustment coefficient set by the user.

Specifically, the wind speed level may be calculated according to the following conditional formula:

$$\mathrm{Lv\_run} = \mathrm{Lv}_0 \cdot \mathrm{K};$$

where, Lv_run is the wind speed level of the windless mode, $\mathrm{Lv}_0$ is the wind speed level calculated by the automatic wind rule or the wind speed level set by the user, and K is the wind speed adjustment coefficient. The wind speed adjustment coefficient may be changed according to the performance of the air conditioner or user needs.

It should be noted that if K>1 and the rotating speed of the blower in the windless mode is less than the minimum blower rotating speed in the normal mode, the blower 11 of the air conditioner 10 is controlled to operate at the minimum blower rotating speed in the normal mode, that is, W=500 rps. If the rotating speed of the blower in the windless mode is less than the minimum blower rotating speed in the normal mode, the blower 11 of the air conditioner 10 is controlled to operate at the minimum blower rotating speed in the normal mode, that is, W=500 rps.

Specifically, the calculation method of the rotating speed of the blower in the windless mode is the same as the calculation method of the rotating speed of the blower in the normal mode. That is, the rotating speed of the blower in the windless mode is related to the maximum blower rotating speed and the minimum blower rotating speed in the normal mode, and the maximum wind speed level. In an example, the maximum blower rotating speed in the normal mode may be 1000 rps, and the minimum blower rotating speed in the normal mode may be 500 rps. If the wind speed level calculated by the automatic wind rules or the wind speed level set by the user is 50%, the wind speed adjustment coefficient is 0.8, then the corresponding blower rotating speed in the windless mode is: W=(1000-500)/100%×(50%×0.8)+500=700 (rps).

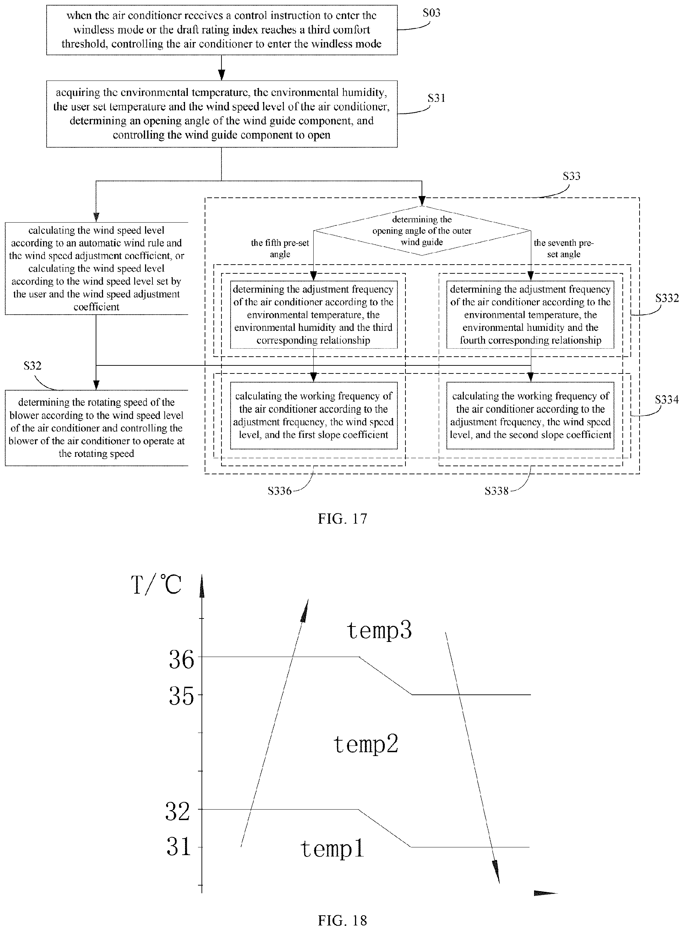

Referring to FIG. 17, in some embodiments, the air conditioner 10 is preset with a windless correspondence between the opening angle of the wind guide component, the environmental temperature, the environmental humidity, and the operating frequency. Step S33 includes the following step S332 and step S334.

At step S332, the adjustment frequency of the air conditioner 10 is determined according to the opening angle of the wind guide component 12, the environmental temperature, the environmental humidity, and the corresponding relationship.

At step S334, the working frequency of the air conditioner is calculated according to the adjustment frequency, the wind speed level and the preset coefficient.

Specifically, step S332 and step S334 may be implemented by the control apparatus 13. That is to say, the control apparatus 13 may be configured to determine the adjustment frequency of the air conditioner 10 according to the opening angle of the wind guide component 12, the environmental temperature, the environmental humidity, and the corresponding relationship, and calculate the working frequency of the air conditioner according to the adjustment frequency, the wind speed level and the preset coefficient.

The preset coefficient is a coefficient obtained by fitting the corresponding frequency points in the windless corresponding relationship.

In some embodiments, the windless corresponding relationship includes a first corresponding relationship and a second corresponding relationship.

Specifically, the first corresponding relationship between the opening angle of the wind guide component 12, the environmental temperature, the environmental humidity, and the operating frequency is shown in Table 2 below:

Table 2

| Maximum operating frequency (Hz) | | Environmental humidity (%) | | | | |
|---|---|---|---|---|---|---|
| Opening angle of the wind guide component | Temperature | Hucr 1 | Hucr2 | Hucr3 | Hucr4 | Hucr5 |
| First windless pre-set angle | Temp1 | 38 | 33 | 28 | 24 | 22 |
| | Temp2 | 48 | 44 | 40 | 36 | 33 |
| | Temp3 | 60 | 56 | 50 | 48 | 44 |

where, tempi, temp2, and temp3 are temperature intervals, and Hucr1, Hucr2, Hucr3, Hucr4, and Hucr5 are relative humidity intervals. The control apparatus 13 may search for the corresponding table according to the opening angle of the wind guide component 12. Specifically, the control apparatus 13 may search for the corresponding table according to the opening angle of the outer wind guide 122 to obtain the operating frequency.

In some embodiments, when the outer wind guide 122 is opened at the first windless pre-set angle, the temperature interval may be determined according to FIG. 18, where the arrow indicates the temperature change trend, and the interval divided by the broken line at the position of the arrow indicates the distribution of each temperature interval. When the change of the environmental temperature is in a rising trend, the upper limit and/or lower limit of the temperature interval may be higher. In an example, temp1≤32°C, 32°C<temp2≤36°C, and temp3>36°C. When the environmental temperature is in a decreasing trend, the upper limit and/or lower limit of the temperature interval may be lower. In an example, temp1≤31°C, 31°C<temp2≤35°C, and temp3>35°C.

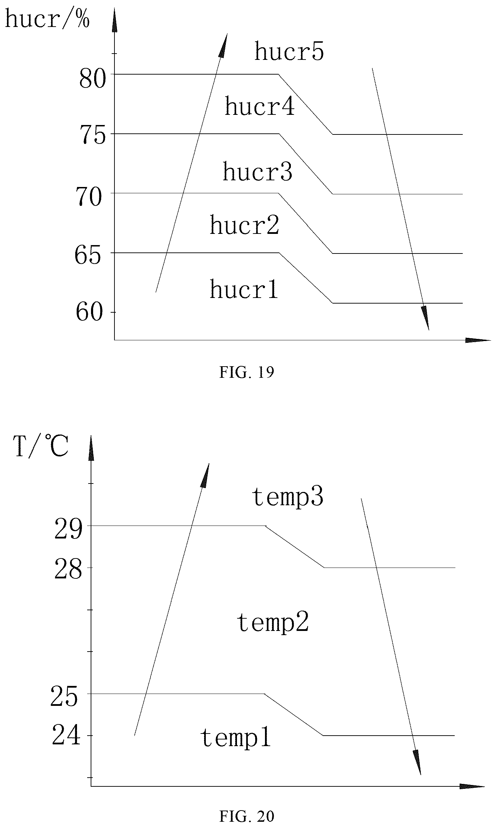

In some embodiments, when the outer wind guide 122 is opened at the first windless pre-set angle, the relative humidity interval may be determined according to FIG. 19, where the arrow indicates the humidity change trend, and the interval divided by the broken line at the position of the arrow indicates the distribution of each temperature interval. When the change of the environmental humidity is in a rising trend, the upper and/or lower limits of the humidity interval may be higher. In an example, Hucr1≤65%, 65%<Hucr2≤70%, 70%<Hucr3≤75%, 75% <Hucr4≤80%, Hucr5 > 80%. When the environmental humidity is in a decreasing trend, the upper and/or lower limits of the humidity range may be lower. In an example, Hucr1≤60%, 60%< Hucr2≤65 %, 65%<Hucr3≤70%, 70%<Hucr4≤75%, Hucr5>75%.

The second corresponding relationship between the opening angle of the wind guide component 12, the environmental temperature, the environmental humidity, and the operating frequency is shown in Table 3 below:

Table 3

| Maximum operating frequency (Hz) | | Environmental humidity (%) | | | | |
|---|---|---|---|---|---|---|
| Opening angle of the wind guide component | Temperature | Hucr 1 | Hucr2 | Hucr3 | Hucr4 | Hucr5 |
| Seventh pre-set angle | Temp1 | 28 | 26 | 22 | 17 | 17 |
| | Temp2 | 28 | 24 | 20 | 15 | 15 |
| | Temp3 | 24 | 22 | 18 | 12 | 12 |

where, tempi, temp2, and temp3 are temperature intervals, and Hucr1, Hucr2, Hucr3, Hucr4, and Hucr5 are relative humidity intervals. The control apparatus 13 may search for the corresponding table according to the opening angle of the wind guide component 12. Specifically, the control apparatus 13 may search for the corresponding table according to the opening angle of the outer wind guide 122 to obtain the operating frequency.

In some embodiments, when the outer wind guide 122 is opened at the second windless pre-set angle, the temperature interval may be determined according to FIG. 20, where the arrow indicates the temperature change trend, and the interval divided by the broken line at the position of the arrow indicates the distribution of each temperature interval. When the change of the environmental temperature is in a rising trend, the upper limit and/or lower limit of the temperature interval may be higher. In an example, temp1≤25°C, 25°C<temp2≤29°C, temp3 > 29°C. When the environmental temperature is in a decreasing trend, the upper limit and/or lower limit of the temperature interval may be lower. In an example, temp1≤24, 24<temp2≤28°C, and temp3>28°C.

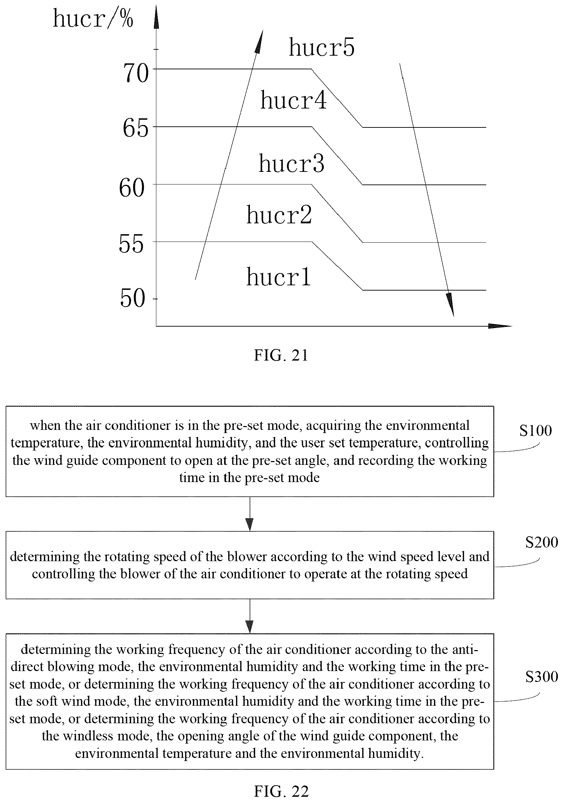

In some embodiments, when the outer wind guide 122 is opened at the second windless pre-set angle, the relative humidity interval may be determined according to FIG. 21, where the arrow indicates the humidity change trend, and the interval divided by the broken line at the position of the arrow indicates the distribution of each temperature interval. When the change of the environmental humidity is in a rising trend, the upper and/or lower limits of the humidity interval may be higher. In an example, Hucr1≤55%, 55%<Hucr2≤60%, 60%<Hucr3≤65%, 65 % <Hucr4≤70%, Hucr5 > 70%. When the environmental humidity is in a decreasing trend, the upper and/or lower limits of the humidity range may be lower. In an example, Hucr1≤50%, 50%< Hucr2≤55 %, 55%<Hucr3≤60%, 60%<Hucr4≤65%, Hucr5>65%.

It may be understood that when the air conditioner 10 is in the windless mode, the working frequency does not exceed the corresponding maximum operating frequency in the first corresponding relationship or the second corresponding relationship.

Of course, in other embodiments, the distribution of the temperature interval and the humidity interval in the first corresponding relationship and the second corresponding relationship may be flexibly configured as required, and is not specifically defined here.

In some embodiments, the preset coefficient includes a first coefficient and a second coefficient, and step S33 includes the following step S336 and step S338.

At step S336, when the outer wind guide 122 is opened at the first windless pre-set angle, the adjustment frequency is determined according to the environmental temperature, the environmental humidity and the first corresponding relationship, and the working frequency of the air conditioner 10 is calculated according to the adjustment frequency, the wind speed level and the first coefficient.

At step S338, when the outer wind guide 122 is opened at the second windless pre-set angle, the adjustment frequency is determined according to the environmental temperature, the environmental humidity and the second corresponding relationship, and the working frequency of the air conditioner 10 is calculated according to the adjustment frequency, the wind speed level and the second coefficient.

Specifically, step S336 and step S338 may be implemented by the control apparatus 13. That is to say, the control apparatus 13 may be configured to determine the adjustment frequency according to the environmental temperature, the environmental humidity and the first corresponding relationship, and calculate the working frequency of the air conditioner 10 according to the adjustment frequency, the wind speed level and the first coefficient when the outer wind guide 122 is opened at the second windless pre-set angle. The control apparatus 13 may be configured to determine the adjustment frequency according to the environmental temperature, the environmental humidity and the second corresponding relationship, and calculate the working frequency of the air conditioner 10 according to the adjustment frequency, the wind speed level and the second coefficient when the outer wind guide 122 is opened at the second windless pre-set angle.

The first coefficient is a slope coefficient calculated by fitting the corresponding frequency point in the first corresponding relationship, and the second coefficient is a slope coefficient calculated by fitting the corresponding frequency point in the second corresponding relationship.

In an example, when the outer wind guide 122 is opened at the first windless pre-set angle, the final working frequency of the air conditioner 10 may be calculated by the following conditional formula:

$$F = F_0 - (Lv_{max} - Lv_{run}) \times \delta_1;$$

where, F is the working frequency of the windless mode, $F_0$ is the adjustment frequency, and $\delta_1$ is the first coefficient.

It should be noted that when the outer wind guide 122 is opened at the first windless pre-set angle, the minimum frequency of the air conditioner 10 is $F_{1\_}min$. If the working frequency of the air conditioner 10 calculated according to the adjustment frequency, the wind speed level and the first coefficient, $F<F_{1\_}min$, then the working frequency of the air conditioner 10 is controlled such that $F=F_{1\_}min$, that is, the air conditioner 10 is controlled to operate at the minimum frequency $F_{1\_}min$.

In an example, when the outer wind guide 122 is opened at the second windless pre-set angle, the final working frequency of the air conditioner 10 may be calculated by the following conditional formula:

$$F = F_0 - (Lv_{max} - Lv_{run}) \times \delta_2;$$

where, F is the operating frequency of the windless mode, $F_0$ is the adjustment frequency, and $\delta_2$ is the second coefficient.

It should be noted that when the outer wind guide 122 is opened at the second windless pre-set angle, the minimum power at which the air conditioner 10 is $F_2$_min. If the working frequency of the air conditioner 10 calculated according to the adjustment frequency, the wind speed level and the first coefficient, F<$F_2$_min, then the working frequency of the air conditioner 10 is controlled such that F=$F_2$_min, that is, the air conditioner 10 is controlled to operate at the minimum frequency $F_2$_min.

When the air conditioner 10 of the embodiment of the present disclosure is in the windless mode, the adjustment of the operating frequency is smoother, the control of the room environment state is more refined, and the cooling capacity, condensation risk, and blowing experience are fully considered, thereby improving the user experience.

In some embodiments, the air conditioner 10 is preset with a third corresponding relationship between the environmental humidity, the working time, and the operating frequency. Step S31 includes: when the air conditioner 10 is in a windless mode, recording the working time in the windless mode. Further, step S33 includes: determining the working frequency of the air conditioner 10 according to the environmental humidity, the working time in the windless mode, and the third correspondence.

Specifically, the above steps may be implemented by the control apparatus 13. That is to say, the control apparatus 13 may be configured to record the working time in the windless mode when the air conditioner 10 is in the windless mode. The control apparatus 13 may also be configured to determine the working frequency of the air conditioner 10 according to the environmental humidity, the working time in the windless mode, and the third corresponding relationship.

The third corresponding relationship is similar to the anti-direct blowing corresponding relationship. Specifically, the third corresponding relationship may be the same as or different from the anti-direct blowing corresponding relationship, and is not specifically defined here.

When the air conditioner 10 enters the windless mode, the outer wind guide 122 is opened at a default angle by default. Then, the control apparatus 13 may determine whether the outer wind guide 122 satisfies the above-mentioned condition of opening at the first windless pre-set angle or the second windless pre-set angle according to the environment temperature, the environment humidity and the user set temperature. If the outer wind guide 122 does not meet the above-mentioned conditions for opening at the first windless pre-set angle or the second windless pre-set angle, the outer wind guide 122 is controlled to remain at the default angle. At this time, the control device 13 determines the working frequency of the air conditioner 10 according to the environmental humidity, the working time in the windless mode, and the third corresponding relationship. In this way, it may be ensured that the air conditioner 10 produces cooling quickly and reaches a comfortable environmental temperature. In particular, the default angle may be the first windless pre-set angle.

Further, after the outer wind guide 122 is opened at the default angle and the air conditioner 10 has operated for a period of time, if the environmental temperature and the environmental humidity change so that the outer wind guide 122 satisfy the conditions for opening at the first windless pre-set angle or for opening at the second windless pre-set angle, the outer wind guide 122 will be controlled to opened at the first windless pre-set angle or the second windless pre-set angle, respectively, and the working frequency of the air conditioner 10 is determined according to the opening angle of the outer wind guide 122, the environmental temperature, the environmental humidity, and the windless corresponding relationship (the first corresponding relationship or the second corresponding relationship).

After the outer wind guide 122 is opened at the first windless pre-set angle or the second the first windless pre-set angle and the air conditioner 10 has operated for a period of time, if the environmental temperature and the environmental humidity change so that the outer wind guide 122 does not satisfy the conditions for opening at the first windless pre-set angle or for opening at the second windless pre-set angle, the outer wind guide 122 will maintain the current angle, and the working frequency of the air conditioner 10 is determined according to the opening angle of the outer wind guide 122, the environmental temperature, the environmental humidity, and the windless corresponding relationship.

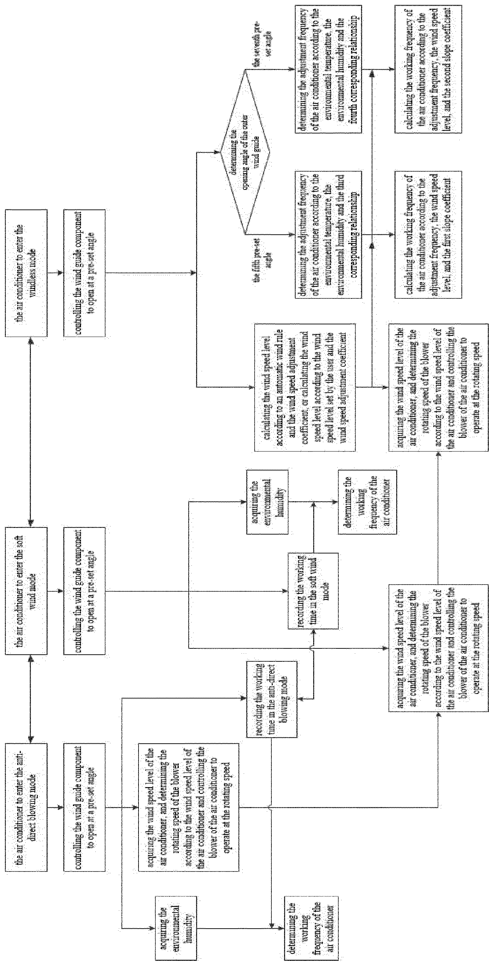

With reference to FIG. 22 and FIG. 23 together, in some embodiments, the air conditioner 10 may be switched between multiple modes. The air conditioner control method includes the following step S100, step S200 and step S300.

At step S100, when the air conditioner 10 is in the comfort mode, the environmental temperature, the environmental humidity and the user set temperature are acquired, the wind guide component 12 is controlled to open at the pre-set angle and the working time in the comfort mode is record. The comfort mode includes an anti-direct blowing mode, a soft wind mode and/or a windless mode.

At step S200, the rotating speed of the blower 11 is determined according to the wind speed level of the air conditioner 10, and the blower 11 of the air conditioner 10 is controlled to operate at the rotating speed.

At step S300, the working frequency of the air conditioner 10 is determined according to the anti-direct blowing mode, the environmental humidity and the working time in the comfort mode, or the working frequency of the air conditioner 10 is determined according to the soft wind mode, the environmental humidity and the working time in the comfort mode, or the working frequency of the air conditioner 10 is determined according to the windless mode, the opening angle of the wind guide component 12, the environmental temperature and the environmental humidity.

Specifically, step S100, step S200, and step S300 may be implemented by the control apparatus 13. That is to say, the control apparatus 13 may be configured to when the air conditioner 10 is in the comfort mode, acquire the environmental temperature, the environmental humidity and the user set temperature, control the wind guide component 12 to open at the pre-set angle and record the working time in the comfort mode. The control apparatus 13 may be configured to determine the rotating speed of the blower 11 according to the wind speed level of the air conditioner 10, and control the blower 11 of the air conditioner 10 to operate at the rotating speed. The control apparatus 13 may be configured to determine the working frequency of the air conditioner 10 according to the anti-direct blowing mode, the environmental humidity and the working time in the comfort mode, or determine the working frequency of the air conditioner 10 according to the soft wind mode, the environmental humidity and the working time in the comfort mode, or determine the working frequency of the air conditioner 10 according to the windless mode, the opening angle of the wind guide component 12, the environmental temperature and the environmental humidity.

The working time in the comfort mode recorded in step S100 is the total time in the anti-direct blowing mode and/or the soft wind mode. The control apparatus 13 may control opening at different pre-set angles according to different modes. For example, when the air conditioner 10 is in the anti-direct blowing mode, the outer wind guide 122 is opened at the first anti-direct blowing pre-set angle, and the inner wind guide 124 is opened at the second anti-direct blowing pre-set angle; when the air conditioner 10 is in the soft wind mode, the outer wind guide 122 is opened at the first soft wind pre-set angle, and the inner wind guide 124 is opened at the second soft wind pre-set angle; when the air conditioner 10 is in the windless mode, the outer wind guide 124 is opened at the first windless pre-set angle or the second windless pre-set angle, and the inner wind guide 124 is opened at the third windless pre-set angle.

The rotating speed of the blower 11 in step S200 may be calculated according to the calculation methods corresponding to the above-mentioned different modes. For example, when the air conditioner 10 is in the anti-direct blowing mode, the rotating speed of the blower 11 may be calculated according to the wind speed level, the maximum blower rotating speed and the minimum blower rotating speed, and the maximum wind speed level in the anti-direct blowing mode; when the air conditioner 10 is in the soft wind mode, the speed of the blower 11 may be calculated according to the wind speed level, the maximum blower rotating speed and the minimum blower rotating speed, and the maximum wind speed level in the soft wind mode; when the air conditioner 10 is in the windless mode, the speed of the blower 11 may be calculated according to the wind speed level, the maximum blower rotating speed and the minimum blower rotating speed, and the maximum wind speed level in the normal mode.

The working frequency of the air conditioner 10 in step S300 may be determined according to the corresponding relationship corresponding to the above-mentioned different modes.

In some embodiments, the air conditioner control method includes: when the air conditioner 10 receives a control instruction to enter the comfort mode, or the draft rating index reaches the corresponding comfort threshold, controlling the air conditioner 10 to enter the corresponding comfort mode.

It may be understood that when there are multiple comfort modes, the air conditioner 10 may be switched between the comfort modes. Specifically, when switching between the anti-direct blowing mode and the soft wind mode, the rotating speed of the blower 11 after switching is calculated, and the wind speed level may be kept the same, that is, the wind speed level is not adjusted after the mode is switched to ensure the continuity of the wind speed control; when the working frequency of the air conditioner 10 is determined according to the environmental humidity and the working time in the comfort mode, and the anti-direct blowing corresponding relationship or the soft wind corresponding relationship, the working time after switching continue to accumulate from the working time before switching, that is, when switching between the anti-direct blowing mode and the soft wind mode, the working time in the comfort mode does not need to be recalculated to ensure the timeliness of the frequency control.

After switching from the anti-direct blowing mode or the soft wind mode to the windless mode, if the wind speed level in the anti-direct blow mode or the soft wind mode has been adjusted, then it is no need to recalculate the wind speed level after switching to the windless mode, and the wind speed level before switching is kept and used for frequency calculation in the windless mode to ensure the continuity of wind speed control. It should be noted that the control apparatus 13 may stop recording the working time in the comfort mode after switching from the anti-direct blowing mode or the soft wind mode to the windless mode. Correspondingly, after switching from the windless mode to the anti-direct blowing mode or the soft wind mode, the control apparatus 13 restarts to record the working time in the comfort mode.

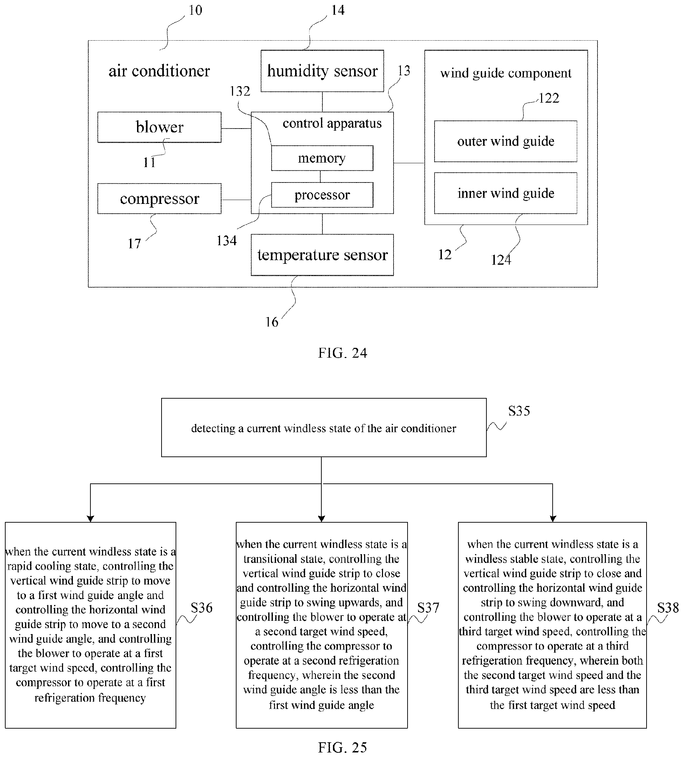

Referring to FIG. 24, the control apparatus 13 includes a memory 132, a processor 134, and an anti-direct blowing control program, a soft wind control program and/or a windless control program stored in the memory 132 and executable by the processor 134, wherein the processor 134, when executing the control programs, implements an air conditioner control method of any embodiment corresponding to the above-mentioned direct blowing mode, soft wind mode, and/or windless mode.

Specifically, when the memory 132 stores the anti-direct blowing control program, the control apparatus 13 may be an anti-direct blowing control apparatus; when the memory 132 stores the soft wind control program, the control apparatus 13 may be a soft wind control apparatus; and when the memory 132 stores the windless control program, the control apparatus 13 may be a windless control apparatus.

In an example, for the anti-direct blowing control apparatus, the following step S212, step S222 and step S232 may be implemented when the anti-direct blowing control program is executed by the processor 134.

At step S212, when the air conditioner 10 is in the anti-direct blowing mode, the wind guide component 12 is controlled to open at a pre-set angle, and the working time in the anti-direct blowing mode is record.

At step S222, the wind speed level of the air conditioner 10 is acquired, the rotating speed of the blower 11 is determined according to the wind speed level, and the blower 11 of the air conditioner 10 is controlled to operate at the rotating speed.

At step S232, the environmental humidity is detected, and the working frequency of the air conditioner 10 is determined according to the working time and the environmental humidity.

In the anti-direct blowing control apparatus 13 of the above embodiment, when the air conditioner 10 is in the anti-direct blowing mode, it is possible to adjust the opening angle of the wind guide component 12, the rotating speed of the blower, and adjust the working frequency of the air conditioner 10 according to the environmental humidity and the working time in the anti-direct blowing mode, softening the sense of wind to reduce the user's feeling of cold wind blowing directly to the body in the cooling mode and improve the user's comfort experience.

In another example, for the soft wind control apparatus, the following step S214, step S224 and step S234 may be implemented when the soft wind control program is executed by the processor 134.

At step S214, when the air conditioner 10 is in the soft wind mode, the wind guide component 12 is controlled to open at a pre-set angle, and the working time in the soft wind mode is record.

At step S224, the rotating speed of the blower 11 is determined according to the wind speed level of the air conditioner 10 and the blower 11 of the air conditioner 10 is controlled to operate at the rotating speed.

At step S234, the environmental humidity is detected, and the working frequency of the air conditioner 10 is determined according to the working time and the environmental humidity.

In the soft wind control apparatus 13 of the above embodiment, when the air conditioner 10 is in the soft wind mode, it is possible to adjust the opening angle of the wind guide component 12, the rotating speed of the blower, and adjust the working frequency of the air conditioner 10 according to the environmental humidity and the working time in the soft wind mode, to reduce the user's feeling of cold wind blowing directly to the body in the cooling mode and improve the user's comfort experience.

In another example, for the windless control apparatus, the following step S31, step S32 and step S33 may be implemented when the windless control program is executed by the processor 134.

At step S31, when the air conditioner 10 is in the windless mode, the environmental temperature, the environmental humidity and the user set temperature are acquired, the opening angle of the wind guide component is determined according to the environmental temperature, the environmental humidity and the user set temperature, and the wind guide component is controlled to open.

At step S32, the rotating speed of the blower 11 is determine according to the wind speed level of the air conditioner 10, and the blower of the air conditioner is control to operate at the rotating speed.

At step S33, the working frequency of the air conditioner is determined according to the opening angle of the wind guide component 12, the environmental temperature and the environmental humidity.

In the windless control apparatus 13 of the above embodiment, when the air conditioner 10 is in the windless mode, it is possible to adjust the opening angle of the wind guide component 12, the rotating speed of the blower, and adjust the working frequency of the air conditioner 10 according to the user set temperature, the environmental temperature, and the environmental humidity, to reduce the user's feeling of cold wind blowing directly to the body in the cooling mode and improve the user's comfort experience.

In the control method of another embodiment of the present disclosure, the operation of the air conditioner 10 in the windless mode may also be controlled by the following embodiment. In the present disclosure, it is possible to control the wind guide strip, the blower and the compressor to perform corresponding actions according to the current windless state, to achieve a windless experience effect, effectively meeting user needs and ensuring user experience, and improving the reliability and comfort of the air conditioner at low cost. In addition, through the joint control of the user set temperature, the environmental temperature, the environmental humidity, and the operating time, the requirements for cooling capacity and anti-condensation are effectively met, further ensuring user experience and meeting user's needs in an easy-to-implement manner.

The following describes the air conditioner control method and apparatus and the air conditioner according to the embodiments of the present disclosure, with reference to the accompanying drawings.

FIG. 25 is a flowchart of an air conditioner control method according to an embodiment of the present disclosure. As shown in FIG. 25, the air conditioner control method includes the following steps.

At step S3 5, the current windless state of the air conditioner is detected.

It should be noted that the embodiment of the present disclosure may realize the windless function, wherein the wind speed, the angle of the wind guide strip and the compressor frequency of the air conditioner are controlled to meet the requirements of the DR (draft rating index) value for the comfort of the windless function. The DR value may be used to quantitatively predict the percentage of dissatisfied people caused by the blowing. Therefore, the application uses the DR value as an example of the comfort evaluation standard, and other comfort evaluation standards may also be used.

Specifically, as shown in the embodiment of the present disclosure, the wind speed of the air conditioner may have a corresponding relationship with the rotating speed of the blower, that is, in this embodiment, the control of the wind speed of the air conditioner may be realized by controlling the rotating speed of the blower.

Further, according to an embodiment of the present disclosure, the method of the embodiment of the present disclosure further includes: receiving a windless instruction; and controlling the air conditioner to enter a rapid cooling state according to the windless instruction.

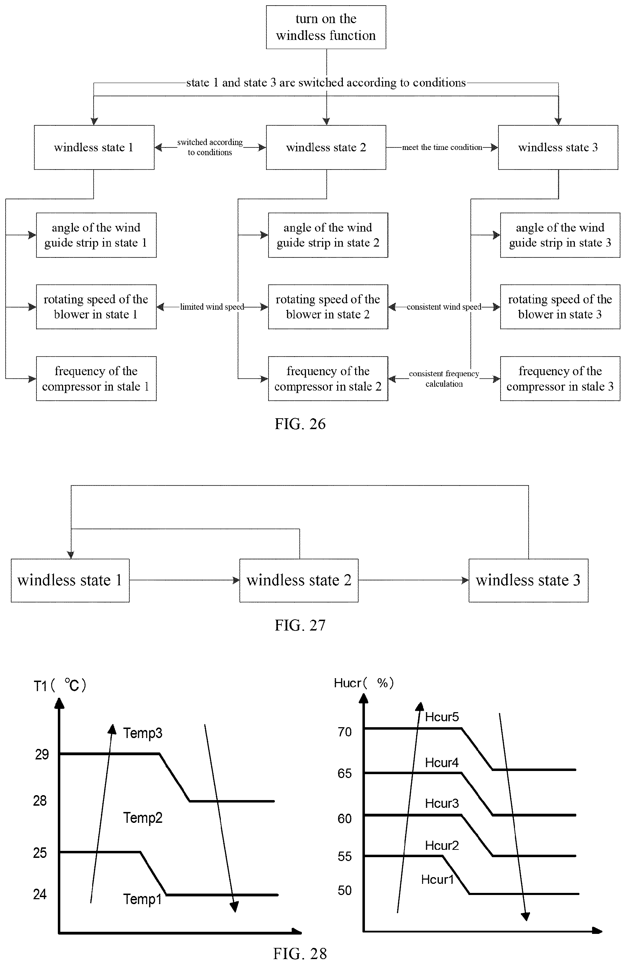

Specifically, the user may select the windless function, that is, send a windless instruction to the air conditioner, through remote control, mobile phone APP, or other air conditioner controllers, to control the air conditioner to enter the windless state. As shown in FIG. 26, the windless state includes a rapid cooling state (the first windless state), a transition state (the second windless state), and a windless stable state (the third windless state).

It should be noted that the environmental parameter of the air conditioner 10 may include an environmental temperature and an environmental humidity, and the system parameter of the air conditioner 10 may be the user set temperature, the operating time, and the pre-set temperature, humidity, and time thresholds. Judgment of windless state: after entering the windless function, the air conditioner enters a rapid cooling state by default, and then adjusts the windless state in real time according to the user set temperature, environmental temperature, environmental humidity, the operating time, and the pre-set temperature, humidity, and time thresholds. In other words, in step S35, when the air conditioner 10 is in the windless mode, the windless state is detected according to the environmental parameter and system parameter of the air conditioner 10. The specific state control logic may be shown in Figure 27. In the embodiment of the present disclosure, the operating time refers to the working time in the windless mode.

In an example of the present disclosure, the wind guide component may include a vertical wind guide strip and a horizontal wind guide strip.

At step S36, when the current windless state is a rapid cooling state, the vertical wind guide strip is controlled to move to a first wind guide angle and the horizontal wind guide strip is controlled to move to a second wind guide angle, and the blower is controlled to operate at a first target wind speed and the compressor is controlled to operate at a first refrigeration frequency.

Optionally, in the rapid cooling state, when the angle of the wind guide strip is controlled, the vertical wind guide strip may be slightly opened, and the horizontal wind guide strip may maintain the angle set by the user, so as to ensure that there is enough air volume for cooling in the first windless state, therefore, the first windless state may also be referred to as a rapid cooling state.

At step S37, when the current windless state is a transitional state, the vertical wind guide strip is controlled to close and the horizontal wind guide strip is controlled to swing upwards, and the blower is controlled to operate at a second target wind speed, and the compressor is controlled to operate at a second refrigeration frequency, wherein the second wind guide angle is less than the first wind guide angle.

Optionally, in the transitional state, when the angle of the wind guide strip is controlled, the vertical wind guide strip may be completely closed, and the horizontal wind guide strip may swing upwards, thereby reducing the air volume, ensuring that the cold air blows upwards, ensuring the cooling capacity, and reducing the DR value. Therefore, the second windless state may also be referred to as a transition state.

It may be understood that the embodiment of the present disclosure shows a windless state during cooling of the air conditioner. At this time, the refrigeration frequency described in the embodiment of the present disclosure may be the working frequency of the air conditioner.

At step S38, when the current windless state is a windless stable state, the vertical wind guide strip is controlled to close and the horizontal wind guide strip is controlled to swing downward, and the blower is controlled to operate at a third target wind speed and the compressor is controlled to operate at a third refrigeration frequency, wherein both the second target wind speed and the third target wind speed are less than the first target wind speed.

Optionally, in the windless stable state, when the angle of the wind guide strip is controlled, the vertical wind guide strip may be completely closed, and the horizontal wind guide strip may swing downwards, thus entering the windless stable stage. Therefore, the third windless state may also be referred to as a windless stable state.

Furthermore, when the wind speed is controlled, automatic wind is default when entering the windless function, and the user may set the wind speed (described in detail below). When transitioning from a transient state, a windless stable state to a rapid cooling state, the wind speed in the rapid cooling state cannot exceed the operating wind speed in the transient state and the windless stable state, to prevent sudden changes in wind speed and reduce the DR value, and may reduce noise.

In addition, according to an embodiment of the present disclosure, the method of the embodiment of the present disclosure further includes: acquiring the second current environmental temperature, current environmental humidity, working time and the current rotating speed; and generating the refrigeration frequency according to the current windless state, the second current environmental temperature, current environmental humidity, working time and the current rotating speed, wherein the maximum value of the first refrigeration frequency is greater than the maximum value of the second refrigeration frequency and the maximum value of the third refrigeration frequency.

That is to say, during frequency control, the maximum frequency limit of the frequency interval corresponding to the rapid cooling state is greater than the frequency limit corresponding to the interval transition state and the windless stable state, so as to ensure the rapid cooling requirement of the rapid cooling state. Different state intervals correspond to different wind guide angles and different wind speeds. The frequency control is combined with the time, wind speed, humidity, and temperature to further avoid the risk of condensation in the wind guide strip, as described in detail in the following examples.

For example, in the rapid cooling state, the frequency is calculated according to the following formula:

$$\mathrm{Fre} = M_1 \cdot T + M_2 \cdot Hu + \delta \,,$$

where, $M_1$ is the time adjustment coefficient, $M_2$ is the humidity adjustment coefficient, and $\delta$ is the frequency adjustment constant, so that the operating frequency of the compressor is adjusted according to the humidity and time.

In the transitional state and the windless stable state, the frequency may be calculated according to the following methods.

The frequency intervals are divided according to the humidity and temperature thresholds, and each interval has different lower frequency limits, as shown follows.

As shown in Figure 28, according to the division method shown in the above figure, the interval frequency is obtained. Table 4 is a table of frequency values, as shown in Table 4:

Table 4

| Allowable minimum frequency (Hz) | | Relative humidity | | | | |
|---|---|---|---|---|---|---|
| | | Hucr1 | Hucr2 | Hucr3 | Hucr4 | Hucr5 |
| Temperature | Temp1 | $f_1$ | $f_2$ | $f_3$ | $f_4$ | $f_5$ |
| | Temp2 | $f_6$ | $f_7$ | $f_8$ | $f_9$ | $f_{10}$ |
| | Temp3 | $f_{11}$ | $f_{12}$ | $f_{13}$ | $f_{14}$ | $f_{15}$ |

The maximum limit frequency of the compressor in interval 2 and interval 3 is calculated according to the current wind speed:

**[0333]** FRE=Frequency value in the table + Current wind speed level· NOFAN_Fre_K,

where, OFAN_Fre_K is the wind speed calculation coefficient.

It should be understood that the settings of step S36 to step S38 are only for convenience of description, and are not intended to limit the execution order of the method.

Further, according to an embodiment of the present disclosure, the method of the embodiment of the present disclosure further includes: acquiring a user set temperature and a first current environmental temperature; and generating a target wind speed according to the current windless state, the user set temperature, and the first current environmental temperature, wherein the first target wind speed is less than the second target wind speed and the third target wind speed.

It can be appreciated that, on the basis of controlling the three elements, the wind speed, the wind guide angle and the compressor frequency, the embodiment of the present disclosure may effectively meet the requirements of refrigeration capacity and anti-condensation through joint control of the user set temperature, the environmental temperature, the environmental humidity, and the working time.

Specifically, the embodiment of the present disclosure does not add a special sensor, is beneficial for the cost control of air conditioner without a reduction in production efficiency, reduces the reliability cost of complex instruments, and decreases subsequent maintenance costs. In addition, while controlling the angle of the air guide components, the refrigeration capacity and condensation risk are fully considered, and the compressor operating frequency, wind speed, humidity, time and other factors are related to each other, so as to obtain a better refrigeration capacity control.

According to an embodiment of the present disclosure, the method of the embodiment of the present disclosure further includes: receiving a user control wind speed instruction, and adjusting the target wind speed according to the user wind speed instruction.

Specifically, in the embodiment of the present disclosure, the angle of the wind guide strip of the air conditioner, including two wind guide control components, the vertical wind guide strip and the horizontal wind guide strip of the air conditioner are adjusted, and the wind speed of the air conditioner are adjusted by setting wind speed and automatic wind control. By the user set wind speed and the wind speed controlled by the user through the air conditioner controller, automatic wind can automatically control the wind speed of the air conditioner according to the user set temperature and environmental temperature, and adjust the operating frequency of the air conditioner, including obtaining different operating frequencies by calculating according to the environmental temperature, the environmental humidity, the operating time, the current wind speed of the air conditioner, and according to different state intervals.

According to the air conditioner control method provided in the embodiments of the present disclosure, it is possible to control the wind guide strip, the blower and the compressor to perform corresponding actions according to the current windless state, to achieve a windless experience effect, effectively meeting user needs and ensuring user experience, and improving the reliability and comfort of the air conditioner at low cost. In addition, through the joint control of the user set temperature, the environmental temperature, the environmental humidity, and the operating time, the requirements for cooling capacity and anti-condensation are effectively met, further ensuring user experience and meeting user's needs in an easy-to-implement manner.

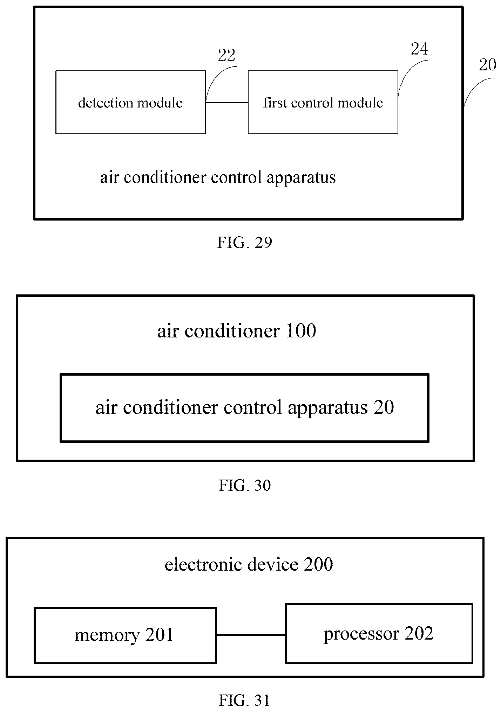

FIG. 29 is a schematic block diagram of an air conditioner control apparatus according to an embodiment of the present disclosure. As shown in FIG. 29, the air conditioner control apparatus 20 includes: a detection module 22 and a first control module 24.

The detection module 22 is configured to detect the current windless state of the air conditioner. The first control module 24 is configured to when the current windless state is a rapid cooling state, control the vertical wind guide strip to move to a first wind guide angle and control the horizontal wind guide strip to move to a second wind guide angle, and control the blower to operate at a first target wind speed, control the compressor to operate at a first refrigeration frequency; when the current windless state is a transition state, control the vertical wind guide strip to close and control the horizontal wind guide strip to swing upwards, and control the blower to operate at a second target wind speed, control the compressor to operate at a second refrigeration frequency, wherein the second wind guide angle is less than the first wind guide angle; and when the current windless state is a windless stable state, control the vertical wind guide strip to close and control the horizontal wind guide strip to swing downward, and control the blower to operate at a third target wind speed, control the compressor to operate at a third refrigeration frequency, wherein both the second target rotating speed and the third target rotating speed are less than the first target rotating speed. The control apparatus 20 of the embodiment of the present disclosure may control the wind guide strip, the blower and the compressor to perform corresponding actions according to the current windless state, to achieve a windless experience effect, effectively meeting user needs and ensuring user experience.

According to an embodiment of the present disclosure, the control apparatus 20 of the embodiment of the present disclosure further includes: a first acquiring module and a first generating module. The first acquiring module is configured to acquire the user set temperature and the first current environmental temperature. The first generating module is configured to generate a target wind speed according to the current windless state, the user set temperature and the first current environmental temperature, wherein the first target wind speed is less than the second target wind speed and the third target wind speed.

According to an embodiment of the present disclosure, the control apparatus 20 of the embodiment of the present disclosure further includes: a first receiving module. The first receiving module is configured to receive a user control wind speed instruction, and adjust the target wind speed according to the user wind speed instruction.

According to an embodiment of the present disclosure, the control apparatus 20 of the embodiment of the present disclosure further includes: a second acquiring module and a second generating module. The second acquiring module is configured to acquire the second current environmental temperature, current environmental humidity, operating time and the current wind speed. The second generating module is configured to generate a refrigeration frequency according to the current windless state, the second current environmental temperature, current environmental humidity, operating time and the current wind speed, wherein the maximum value of the first refrigeration frequency is greater than the maximum value of the second refrigeration frequency and the maximum value of the third refrigeration frequency.

According to an embodiment of the present disclosure, the control apparatus 20 of the embodiment of the present disclosure further includes: a second receiving module, configured to receive a windless instruction; and a second control module, configured to control the air conditioner to enter the rapid cooling state according to the windless instruction

It should be noted that the foregoing explanation of the embodiment of the air conditioner control method is also applicable to the air conditioner control apparatus of this embodiment, and will not be repeated here.

According to the air conditioner control apparatus provided in the embodiment of the present disclosure, it is possible to control the wind guide strip, the blower and the compressor to perform corresponding actions according to the current windless state, to achieve a windless experience effect, effectively meeting user needs and ensuring user experience, and improving the reliability and comfort of the air conditioner at low cost. In addition, through the joint control of the user set temperature, the environmental temperature, the environmental humidity, and the operating time, the requirements for cooling capacity and anti-condensation are effectively met, further ensuring user experience and meeting user's needs in an easy-to-implement manner.

As shown in FIG. 30, an air conditioner 100 comprises an air conditioner control apparatus 20 as mentioned above.

It is possible to control the wind guide strip, the blower and the compressor to perform corresponding actions according to the current windless state, to achieve a windless experience effect, effectively meeting user needs and ensuring user experience, and improving the reliability and comfort of the air conditioner at low cost. In addition, through the joint control of the user set temperature, the environmental temperature, the environmental humidity, and the operating time, the requirements for cooling capacity and anti-condensation are effectively met, further ensuring user experience and meeting user's needs in an easy-to-implement manner.

As shown in FIG. 31, an embodiment of the present invention provides an electronic device 200, comprising: a memory 201, a processor 202, and a computer program stored in the memory 201 and executable by the processor 202, wherein the processor 202, when executing the program, implements an air conditioner control method as mentioned above.

According to the electronic device 200 provided in the embodiment of the present disclosure, by executing the above air conditioner control method, it is possible to control the wind guide strip, the blower and the compressor to perform corresponding actions according to the current windless state, to achieve a windless experience effect, effectively meeting user needs and ensuring user experience, and improving the reliability and comfort of the air conditioner at low cost. In addition, through the joint control of the user set temperature, the environmental temperature, the environmental humidity, and the operating time, the requirements for cooling capacity and anti-condensation are effectively met, further ensuring user experience and meeting user's needs in an easy-to-implement manner.

In one example, the electronic device may be an air conditioner.

An embodiment of the present invention provides a non-temporary computer-readable storage medium having stored therein a computer program that, when executed by a processor, implements an air conditioner control method as mentioned above.

Any process or method description in the flowchart or described in other ways herein may be understood as a module, segment or part of code that includes one or more executable instructions for implementing specific logical functions or steps of the process. The scope of the preferred embodiments of the present disclosure includes additional implementations, which may not be in the order shown or discussed, including performing functions in a substantially simultaneous manner or in the reverse order according to the functions involved, as understood by those skilled in the art to which the embodiments of the application belong.

The logic and/or steps represented in the flowchart or described in other ways herein, for example, may be considered as a sequenced list of executable instructions for implementing logic functions, and may be embodied in any computer-readable medium, for use by instruction execution systems, devices, or equipment (such as computer-based systems, systems including processing modules, or other systems that may fetch instructions from instruction execution systems, devices, or equipment and execute instructions), or combined with these instruction execution systems, devices or equipment. For the purposes of this specification, a "computer-readable medium" may be any device that may contain, store, communicate, propagate, or transmit a program for use by an instruction execution system, device, or equipment or combined with these instruction execution systems, devices or equipment. More specific examples (non-exhaustive list) of computer-readable media include the following: electrical connections (electronic devices) with one or more wiring, portable computer disk cases (magnetic devices), random access memory (RAM), read only memory (ROM), electronic programmable read only memory (EPROM or flash memory), fiber optic devices, and compact disc read only memory (CDROM). In addition, the computer-readable medium may even be paper or other suitable medium on which the program may be printed, because the program can be obtained electronically, for example, by optically scanning paper or other media, then editing, interpreting, or processing in other suitable ways if necessary, and then stored in a computer memory.

It should be understood that each part of the embodiments of the present disclosure may be implemented by hardware, software, firmware, or a combination thereof. In the above embodiments, multiple steps or methods may be implemented by software or firmware stored in a memory and executed by a suitable instruction execution system. For example, if implemented by hardware, as in another embodiment, it may be implemented by any one or a combination of the following technologies known in the art: discrete logic circuits with logic gate circuits used to implement logic functions for data signals, application-specific integrated circuits with suitable combinational logic gate circuits, programmable gate arrays (PGA), field programmable gate arrays (FPGA), etc.

A person of ordinary skill in the art may understand that all or part of the steps of the method of the foregoing embodiments may be implemented by a program instructing relevant hardware. The program may be stored in a computer-readable storage medium. When executed, it includes one of the steps of the method embodiment or a combination thereof.

In addition, individual functional units in each embodiment of the present disclosure may be integrated into one processing module, or individual units may physically exist separately, or two or more units may be integrated into one module. The integrated modules may be implemented in the form of hardware or software functional modules. If the integrated module is implemented in the form of a software function module and sold or used as an independent product, it may also be stored in a computer-readable storage medium.

The aforementioned storage medium may be a read only memory, a magnetic disk or an optical disk, etc.

**Claims**

1.  An air conditioner control method, the air conditioner (10) comprising a blower (11) and a wind guide component (12), wherein the control method comprises:

    acquiring (S1) an operation mode of the air conditioner (10), wherein the operation mode of the air conditioner (10) comprises a comfort mode and a windless mode;
    when the operation mode of the air conditioner (10) is the windless mode, acquiring (S3) an environmental parameter and a system parameter of the air conditioner (10), and determining a rotating speed of the blower (11), an angle of the wind guide component (12) and a working frequency of the air conditioner (10) according to the environmental parameter and/or the system parameter of the air conditioner (10),
    the environmental parameter of the air conditioner (10) comprises an environmental humidity,
    **characterised in that**
    the system parameter of the air conditioner (10) comprises a wind speed level of the air conditioner (10) and a working time in the comfort mode, and
    when the operation mode of the air conditioner (10) is the comfort mode, controlling (S21) the wind guide component (12) to open at a pre-set angle, acquiring said environmental parameter and said system parameter of the air conditioner (10), and determining a rotating speed of the blower (11) and a working frequency of the air conditioner (10) according to said environmental parameter and/or said system parameter of the air conditioner (10), wherein comprising:
    when the air conditioner (10) is in the comfort mode, controlling the wind guide component (12) to open at the pre-set angle, and recording the working time in the comfort mode;
    acquiring (S22) the wind speed level, and determining the rotating speed of the blower (11) according to the wind speed level and controlling the blower (11) of the air conditioner (10) to operate at the rotating speed; and
    acquiring (S23) the environmental humidity, and determining the working frequency of the air conditioner (10) according to the working time in the comfort mode and the environmental humidity.

2.  The air conditioner control method according to claim 1, wherein the air conditioner control method comprises:
    when the air conditioner (10) receives a control instruction to enter the comfort mode or a draft rating index reaches a comfort threshold, controlling (S02) the air conditioner (10) to enter the comfort mode

3.  The air conditioner control method according to claim 2, wherein

    the comfort mode comprises an anti-direct blowing mode and/or a soft wind mode,
    the comfort threshold comprises a first comfort threshold and a second comfort threshold, and
    the air conditioner control method comprises:

    when the air conditioner (10) receives the control instruction to enter the anti-direct blowing mode or the draft rating index reaches the first comfort threshold, controlling the air conditioner (10) to enter the anti-direct blowing mode; or
    when the air conditioner (10) receives the control instruction to enter the soft wind mode or the draft rating index reaches the second comfort threshold, controlling the air conditioner (10) to enter the soft wind mode, wherein the second comfort threshold is less than the first comfort threshold

4. The air conditioner control method according to claim 1, wherein

the wind guide component (12) comprises an outer wind guide (122) and an inner wind guide (124),
the pre-set angle comprises a first pre-set angle and a second pre-set angle, and
said controlling the wind guide component (12) to open at the pre-set angle comprises:

controlling the outer wind guide (122) to open at the first pre-set angle; and
controlling the inner wind (124) guide to open at the second pre-set angle.

5. The air conditioner control method according to claim 1, wherein:

the wind speed level is calculated according to an automatic wind rule of the air conditioner (10), or determined according to a user setting; and/or
wherein the rotating speed of the blower (11) is related to the maximum blower rotating speed and the minimum blower rotating speed, the maximum wind speed level and the wind speed level of the air conditioner (10) in the comfort mode.

6. The air conditioner control method according to claim 1, wherein

the air conditioner (10) is preset with a corresponding relationship between the working time, the environmental humidity, and the operating frequency, and
said determining the working frequency of the air conditioner (10) according to the working time and the environmental humidity comprises:
determining the working frequency of the air conditioner (10) according to the working time in the comfort mode, the environmental humidity, and the corresponding relationship.

7. The air conditioner control method according to claim 1, wherein

the environmental parameter of the air conditioner (10) comprises an environmental temperature and an environmental humidity,
the system parameter of the air conditioner (10) comprises a user set temperature and a wind speed level of the air conditioner (10), and
when the operation mode of the air conditioner (10) is the windless mode, said acquiring an environmental parameter and a system parameter of the air conditioner (10), and determining a rotating speed of the blower (11), an angle of the wind guide component (12) and a working frequency of the air conditioner (10) according to the environmental parameter and/or the system parameter of the air conditioner (10) comprise:

when the air conditioner (10) is in the windless mode, acquiring (S31) the environmental temperature, the environmental humidity, the user set temperature and the wind speed level, determining an opening angle of the wind guide component (12) according to the environmental temperature, the environmental humidity and the user set temperature, and controlling the wind guide component (12) to open according to the opening angle of the wind guide component (12);
determining (S32) the rotating speed of the blower (11) according to the wind speed level and controlling the blower (11) of the air conditioner (10) to operate at the rotating speed; and
determining (S33) the working frequency of the air conditioner (10) according to the opening angle of the wind guide component (12), the environmental temperature and the environmental humidity.

8. The air conditioner control method according to claim 7, wherein the air conditioner control method comprises:
when the air conditioner (10) receives a control instruction to enter the windless mode or the draft rating index reaches a comfort threshold, controlling the air conditioner (10) to enter the windless mode.

9. The air conditioner control method according to claim 7, wherein:

- the wind guide component (12) comprises an outer wind guide (122), and

said determining the opening angle of the wind guide component (12) according to the environmental temperature, the environmental humidity and the user set temperature, and controlling the wind guide component (12) to open according to the opening angle of the wind guide component (12) comprise:

when the environmental temperature is greater than a first pre-set temperature and a first set temperature, and the environmental humidity is not less than a first pre-set humidity, controlling the outer wind guide (122) to open at a first windless preset angle, wherein the first set temperature is determined by the user set temperature and an adjustment value; and

when the environmental temperature is not greater than a second pre-set temperature, or the environmental temperature is not greater than a second set temperature, or the environmental humidity is not greater than a second pre-set humidity, controlling the outer wind guide (122) to open at a second windless preset angle, wherein the second set temperature is the user set temperature, the second pre-set temperature is less than the first pre-set temperature, the second set temperature is less than the first set temperature, the second pre-set humidity is less than the first pre-set humidity, and the second windless pre-set angle is less than the first windless pre-set angle; and/or

- the wind guide component (12) comprises an inner wind guide (124), and
said determining the opening angle of the wind guide component (12) according to the environmental temperature, the environmental humidity and the user set temperature, and controlling the wind guide component (12) to open according to the opening angle of the wind guide component (12) comprises:
controlling the inner wind guide (124) to open at a third windless preset angle.

**10.** The air conditioner control method according to claim 9, wherein:

the air conditioner (10) is preset with a corresponding relationship between the opening angle of the wind guide component (12), the environmental temperature, the environmental humidity and the operating frequency, wherein the preset coefficient comprises a first coefficient and a second coefficient, the corresponding relationship comprises a first relationship and a second relationship, the first coefficient is calculated by fitting the frequency points of the first relationship, and the second coefficient is calculated by fitting the frequency points of the second relationship; and
said determining the working frequency of the air conditioner (10) according to the opening angle of the wind guide component (12), the environmental temperature and the environmental humidity comprises:

determining an adjustment frequency of the air conditioner (10) according to the opening angle of the wind guide component (12), the environmental temperature, the environmental humidity and the corresponding relationship; and
calculating the working frequency of the air conditioner (10) according to the adjustment frequency, the wind speed level, and a preset coefficient;
when the outer wind guide (122) is opened at the first windless preset angle, determining the adjustment frequency according to the environmental temperature, the environmental humidity and the first relationship, and calculating the working frequency of the air conditioner (10) according to the adjustment frequency, the wind speed level, and the first coefficient; and
when the outer wind guide (122) is opened at the second windless preset angle, determining the adjustment frequency according to the environmental temperature, the environmental humidity and the second relationship, and calculating the working frequency of the air conditioner (10) according to the adjustment frequency, the wind speed level, and the second coefficient

**11.** The air conditioner control method according to claim 7, wherein

the system parameter comprises the working time in the windless mode, and
the air conditioner control method comprises:

when the air conditioner (10) is in the windless mode, recording the working time in the windless mode; and determining the working frequency of the air conditioner (10) according to the environmental humidity and the working time in the windless mode; and
wherein the wind speed level is calculated according to an automatic wind rule and the wind speed adjustment coefficient of the air conditioner (10), or calculated according to the wind speed level set by the user and the wind speed adjustment coefficient.

**12.** An electronic device (200), comprising: a memory (132, 201), a processor (134, 202), and a computer program stored in the memory (132, 201) and executable by the processor (134, 202), wherein the processor (134, 202), when executing the program, implements an air conditioner control method according to any one of claims 1-11.

13. A computer-readable storage medium having stored therein a computer program that, when executed by a processor (134, 202), implements an air conditioner control method according to any one of claims 1-11.

**Patentansprüche**

1. Klimaanlagensteuerverfahren, wobei die Klimaanlage (10) ein Gebläse (11) und eine Windführungskomponente (12) umfasst, wobei das Steuerverfahren Folgendes beinhaltet:

Erfassen (S1) eines Betriebsmodus der Klimaanlage (10), wobei der Betriebsmodus der Klimaanlage (10) einen Komfortmodus und einen Windstillemodus umfasst;
Erfassen (S3), wenn der Betriebsmodus der Klimaanlage (10) der Windstillemodus ist, eines Umgebungsparameters und eines Systemparameters der Klimaanlage (10) und Bestimmen einer Drehgeschwindigkeit des Gebläses (11), eines Winkels der Windführungskomponente (12) und einer Arbeitsfrequenz der Klimaanlage (10) gemäß dem Umgebungsparameter und/oder dem Systemparameter der Klimaanlage (10),
wobei der Umgebungsparameter der Klimaanlage (10) eine Umgebungsfeuchtigkeit umfasst,
**dadurch gekennzeichnet, dass** der Systemparameter der Klimaanlage (10) ein Windgeschwindigkeitsniveau der Klimaanlage (10) und eine Arbeitszeit im Komfortmodus umfasst, und
Steuern (S21), wenn der Betriebsmodus der Klimaanlage (10) der Komfortmodus ist, der Windführungskomponente (12) zum Öffnen in einem voreingestellten Winkel, Erfassen des genannten Umgebungsparameters und des genannten Systemparameters der Klimaanlage (10) und Bestimmen einer Drehgeschwindigkeit des Gebläses (11) und einer Arbeitsfrequenz der Klimaanlage (10) gemäß dem genannten Umgebungsparameter und/oder dem genannten Systemparameter der Klimaanlage (10), wobei es Folgendes beinhaltet:

Steuern, wenn die Klimaanlage (10) im Komfortmodus ist, der Windführungskomponente (12) zum Öffnen in dem voreingestellten Winkel, und Aufzeichnen der Arbeitszeit im Komfortmodus;
Erfassen (S22) des Windgeschwindigkeitsniveaus und Bestimmen der Drehgeschwindigkeit des Gebläses (11) gemäß dem Windgeschwindigkeitsniveau und Steuern des Gebläses (11) der Klimaanlage (10) zum Arbeiten mit der Drehgeschwindigkeit; und
Erfassen (S23) der Umgebungsfeuchtigkeit und Bestimmen der Arbeitsfrequenz der Klimaanlage (10) gemäß der Arbeitszeit im Komfortmodus und der Umgebungsfeuchtigkeit.

2. Klimaanlagensteuerverfahren nach Anspruch 1, wobei das Klimaanlagensteuerverfahren Folgendes beinhaltet:
Steuern (S02), wenn die Klimaanlage (10) einen Steuerbefehl zum Eintreten in den Komfortmodus empfängt oder ein Zugluftbewertungsindex eine Komfortschwelle erreicht, der Klimaanlage (10) zum Eintreten in den Komfortmodus.

3. Klimaanlagensteuerverfahren nach Anspruch 2, wobei

der Komfortmodus einen Antidirektblasmodus und/oder einen Sanftwindmodus umfasst,
der Komfortschwellenwert einen ersten Komfortschwellenwert und einen zweiten Komfortschwellenwert umfasst, und
das Klimaanlagensteuerverfahren Folgendes beinhaltet:

Steuern, wenn die Klimaanlage (10) den Steuerbefehl zum Eintreten in den Antidirektblasmodus empfängt oder der Zugluftbewertungsindex den ersten Komfortschwellenwert erreicht, der Klimaanlage (10) zum Eintreten in den Antidirektblasmodus; oder
Steuern, wenn die Klimaanlage (10) den Steuerbefehl zum Eintreten in den Sanftwindmodus empfängt oder der Zugluftbewertungsindex den zweiten Komfortschwellenwert erreicht, der Klimaanlage (10) zum Eintreten in den Sanftwindmodus, wobei der zweite Komfortschwellenwert kleiner als der erste Komfortschwellenwert ist.

4. Klimaanlagensteuerverfahren nach Anspruch 1, wobei

die Windführungskomponente (12) eine äußere Windführung (122) und eine innere Windführung (124) umfasst,

der voreingestellte Winkel einen ersten voreingestellten Winkel und einen zweiten voreingestellten Winkel umfasst, und
das genannte Steuern der Windführungskomponente (12) zum Öffnen in dem voreingestellten Winkel Folgendes beinhaltet:

Steuern der äußeren Windführung (122) zum Öffnen in dem ersten voreingestellten Winkel; und
Steuern der inneren Windführung (124) zum Öffnen in dem zweiten voreingestellten Winkel.

5. Klimaanlagensteuerverfahren nach Anspruch 1, wobei:

das Windgeschwindigkeitsniveau gemäß einer automatischen Windregel der Klimaanlage (10) berechnet oder gemäß einer Benutzereinstellung bestimmt wird; und/oder
wobei die Drehgeschwindigkeit des Gebläses (11) mit der maximalen Gebläsedrehgeschwindigkeit und der minimalen Gebläsedrehgeschwindigkeit, dem maximalen Windgeschwindigkeitsniveau und dem Windgeschwindigkeitsniveau der Klimaanlage (10) im Komfortmodus bezogen ist.

6. Klimaanlagensteuerverfahren nach Anspruch 1, wobei

die Klimaanlage (10) mit einer entsprechenden Beziehung zwischen der Arbeitszeit, der Umgebungsfeuchtigkeit und der Betriebsfrequenz voreingestellt wird, und
das genannte Bestimmen der Arbeitsfrequenz der Klimaanlage (10) gemäß der Arbeitszeit und der Umgebungsfeuchtigkeit Folgendes beinhaltet:
Bestimmen der Arbeitsfrequenz der Klimaanlage (10) gemäß der Arbeitszeit im Komfortmodus, der Umgebungsfeuchtigkeit und der entsprechenden Beziehung.

7. Klimaanlagensteuerverfahren nach Anspruch 1, wobei

der Umgebungsparameter der Klimaanlage (10) eine Umgebungstemperatur und eine Umgebungsfeuchtigkeit umfasst,
der Systemparameter der Klimaanlage (10) eine vom Benutzer eingestellte Temperatur und ein Windgeschwindigkeitsniveau der Klimaanlage (10) umfasst, und
wenn der Betriebsmodus der Klimaanlage (10) der Windstillemodus ist, das genannte Erfassen eines Umgebungsparameters und eines Systemparameters der Klimaanlage (10) und das Bestimmen einer Drehgeschwindigkeit des Gebläses (11), eines Winkels der Windführungskomponente (12) und einer Arbeitsfrequenz der Klimaanlage (10) gemäß dem Umgebungsparameter und/oder dem Systemparameter der Klimaanlage (10) Folgendes beinhaltet:

Erfassen (S31), wenn die Klimaanlage (10) im Windstillemodus ist, der Umgebungstemperatur, der Umgebungsfeuchtigkeit, der vom Benutzer eingestellten Temperatur und des Windgeschwindigkeitsniveaus,
Bestimmen eines Öffnungswinkels der Windführungskomponente (12) gemäß der Umgebungstemperatur, der Umgebungsfeuchtigkeit und der vom Benutzer eingestellten Temperatur, und Steuern der Windführungskomponente (12) zum Öffnen gemäß dem Öffnungswinkel der Windführungskomponente (12);
Bestimmen (S32) der Drehgeschwindigkeit des Gebläses (11) gemäß dem Windgeschwindigkeitsniveau und Steuern des Gebläses (11) der Klimaanlage (10) zum Arbeiten mit der Drehgeschwindigkeit; und
Bestimmen (S33) der Arbeitsfrequenz der Klimaanlage (10) gemäß dem Öffnungswinkel der Windführungskomponente (12), der Umgebungstemperatur und der Umgebungsfeuchtigkeit.

8. Klimaanlagensteuerverfahren nach Anspruch 7, wobei das Klimaanlagensteuerverfahren Folgendes beinhaltet:
Steuern, wenn die Klimaanlage (10) einen Steuerbefehl zum Eintreten in den Windstillemodus empfängt oder der Zugluftbewertungsindex einen Komfortschwellenwert erreicht, der Klimaanlage (10) zum Eintreten in den Windstillemodus.

9. Klimaanlagensteuerverfahren nach Anspruch 7, wobei:

- die Windführungskomponente (12) eine äußere Windführung (122) umfasst, und

das genannte Bestimmen des Öffnungswinkels der Windführungskomponente (12) gemäß der Umgebungstemperatur, der Umgebungsfeuchtigkeit und der vom Benutzer eingestellten Temperatur und das Steuern der Windführungskomponente (12) zum Öffnen gemäß dem Öffnungswinkel der Windführungskomponente (12) Folgendes beinhalten:

Steuern, wenn die Umgebungstemperatur größer als eine erste voreingestellte Temperatur und eine erste eingestellte Temperatur ist und die Umgebungsfeuchtigkeit nicht kleiner als eine erste voreingestellte Feuchtigkeit ist, der äußeren Windführung (122) zum Öffnen in einem ersten voreingestellten Windstillwinkel, wobei die erste eingestellte Temperatur durch die vom Benutzer eingestellte Temperatur und einen Justagewert bestimmt wird; und

Steuern, wenn die Umgebungstemperatur nicht größer als eine zweite voreingestellte Temperatur ist oder die Umgebungstemperatur nicht größer als eine zweite eingestellte Temperatur ist oder die Umgebungsfeuchtigkeit nicht größer als eine zweite voreingestellte Feuchtigkeit ist, der äußeren Windführung (122) zum Öffnen bei einem zweiten voreingestellten Windstillwinkel, wobei die zweite eingestellte Temperatur die vom Benutzer eingestellte Temperatur ist, die zweite voreingestellte Temperatur kleiner als die erste voreingestellte Temperatur ist, die zweite eingestellte Temperatur kleiner als die erste eingestellte Feuchtigkeit ist, die zweite voreingestellte Feuchtigkeit kleiner als die erste voreingestellte Feuchtigkeit ist und die zweite voreingestellte Windstillwinkel kleiner als der erste voreingestellte Windstillwinkel ist; und/oder

- die Windführungskomponente (12) eine innere Windführung (124) umfasst, und

das genannte Bestimmen des Öffnungswinkels der Windführungskomponente (12) gemäß der Umgebungstemperatur, der Umgebungsfeuchtigkeit und der vom Benutzer eingestellten Temperatur und das Steuern der Windführungskomponente (12) zum Öffnen gemäß dem Öffnungswinkel der Windführungskomponente (12) Folgendes beinhaltet:

Steuern der inneren Windführung (124) zum Öffnen in einem dritten voreingestellten Windstillewinkel.

10. Klimaanlagensteuerverfahren nach Anspruch 9, wobei:

die Klimaanlage (10) mit einer entsprechenden Beziehung zwischen dem Öffnungswinkel der Windführungskomponente (12), der Umgebungstemperatur, der Umgebungsfeuchtigkeit und der Betriebsfrequenz voreingestellt wird, wobei der voreingestellte Koeffizient einen ersten Koeffizienten und einen zweiten Koeffizienten umfasst, die entsprechende Beziehung eine erste Beziehung und eine zweite Beziehung umfasst, der erste Koeffizient durch Anpassen der Frequenzpunkte der ersten Beziehung berechnet wird und der zweite Koeffizient durch Anpassen der Frequenzpunkte der zweiten Beziehung berechnet wird; und

das genannte Bestimmen der Arbeitsfrequenz der Klimaanlage (10) gemäß dem Öffnungswinkel der Windführungskomponente (12), der Umgebungstemperatur und der Umgebungsfeuchtigkeit Folgendes beinhaltet:

Bestimmen einer Justagefrequenz der Klimaanlage (10) gemäß dem Öffnungswinkel der Windführungskomponente (12), der Umgebungstemperatur, der Umgebungsfeuchtigkeit und der entsprechenden Beziehung; und

Berechnen der Arbeitsfrequenz der Klimaanlage (10) gemäß der Justagefrequenz, dem Windgeschwindigkeitsniveau und einem voreingestellten Koeffizi enten;

Bestimmen, wenn die äußere Windführung (122) in dem ersten voreingestellten Windstillwinkel geöffnet ist, der Justagefrequenz gemäß der Umgebungstemperatur, der Umgebungsfeuchtigkeit und der ersten Beziehung, und Berechnen der Arbeitsfrequenz der Klimaanlage (10) gemäß der Justagefrequenz, dem Windgeschwindigkeitsniveau und dem ersten Koeffizienten; und

Bestimmen, wenn die äußere Windführung (122) in dem zweiten voreingestellten Windstillwinkel geöffnet ist, der Justagefrequenz gemäß der Umgebungstemperatur, der Umgebungsfeuchtigkeit und der zweiten Beziehung, und Berechnen der Arbeitsfrequenz der Klimaanlage (10) gemäß der Justagefrequenz, dem Windgeschwindigkeitsniveau und dem zweiten Koeffizienten.

11. Klimaanlagensteuerverfahren nach Anspruch 7, wobei

der Systemparameter die Arbeitszeit im Windstillemodus umfasst, und

das Klimaanlagensteuerverfahren Folgendes beinhaltet:

Aufzeichnen, wenn die Klimaanlage (10) im Windstillemodus ist, der Arbeitszeit im Windstillemodus; und Bestimmen der Arbeitsfrequenz der Klimaanlage (10) gemäß der Umgebungsfeuchtigkeit und der Arbeitszeit im Windstillemodus; und

wobei das Windgeschwindigkeitsniveau gemäß einer automatischen Windregel und dem Windgeschwindigkeitsjustagekoeffizienten der Klimaanlage (10) berechnet wird, oder gemäß dem vom Benutzer eingestellten Windgeschwindigkeitsniveau und dem Windgeschwindigkeitsjustagekoeffizienten berechnet wird.

12. Elektronisches Gerät (200), das Folgendes umfasst: einen Speicher (132, 201), einen Prozessor (134, 202) und ein in dem Speicher (132, 201) gespeichertes und von dem Prozessor (134, 202) ausführbares Computerprogramm, wobei der Prozessor (134, 202) bei Ausführung des Programms ein Klimaanlagensteuerverfahren nach einem der Ansprüche 1 bis 11 implementiert.

13. Computerlesbares Speichermedium, auf dem ein Computerprogramm gespeichert ist, das bei Ausführung durch einen Prozessor (134, 202) ein Klimaanlagensteuerverfahren nach einem der Ansprüche 1-11 implementiert.

**Revendications**

1. Un procédé de commande de climatiseur, le climatiseur (10) comprenant une soufflante (11) et un composant guide de vent (12), où le procédé de commande comprend :

l'acquisition (S1) d'un mode de fonctionnement du climatiseur (10), où le mode de fonctionnement du climatiseur (10) comprend un mode confort et un mode sans vent,
lorsque le mode de fonctionnement du climatiseur (10) est le mode sans vent, l'acquisition (S3) d'un paramètre environnemental et d'un paramètre système du climatiseur (10) et la détermination d'une vitesse de rotation de la soufflante (11), d'un angle du composant guide de vent (12) et d'une fréquence de fonctionnement du climatiseur (10) en fonction du paramètre environnemental et/ou du paramètre système du climatiseur (10),
le paramètre environnemental du climatiseur (10) comprend une humidité environnementale, **caractérisé en ce que**
le paramètre système du climatiseur (10) comprend un niveau de vitesse du vent du climatiseur (10) et un temps de fonctionnement dans le mode confort, et
lorsque le mode de fonctionnement du climatiseur (10) est le mode confort, la commande (S21) du composant guide de vent (12) de façon à s'ouvrir à un angle préréglé, l'acquisition dudit paramètre environnemental et dudit paramètre système du climatiseur (10), et la détermination d'une vitesse de rotation de la soufflante (11) et d'une fréquence de fonctionnement du climatiseur (10) en fonction dudit paramètre environnemental et/ou dudit paramètre système du climatiseur (10), où comprenant :

lorsque le climatiseur (10) est dans le mode confort, la commande du composant guide de vent (12) de façon à s'ouvrir à l'angle préréglé, et l'enregistrement du temps de fonctionnement dans le mode confort, l'acquisition (S22) du niveau de vitesse du vent, et la détermination de la vitesse de rotation de la soufflante (11) en fonction du niveau de vitesse du vent et de la commande de la soufflante (11) du climatiseur (10) de façon à fonctionner à la vitesse de rotation, et
l'acquisition (S23) de l'humidité environnementale et la détermination de la fréquence de fonctionnement du climatiseur (10) en fonction du temps de fonctionnement dans le mode confort et de l'humidité environnementale.

2. Le procédé de commande de climatiseur selon la Revendication 1, où le procédé de commande de climatiseur comprend :
lorsque le climatiseur (10) reçoit une instruction de commande d'entrée dans le mode confort ou qu'un indice de taux de courant d'air atteint un seuil de confort, la commande (S02) du climatiseur (10) de façon à entrer dans le mode confort.

3. Le procédé de commande de climatiseur selon la Revendication 2, où

le mode confort comprend un mode de soufflage anti-direct et/ou un mode de vent doux,
le seuil de confort comprend un premier seuil de confort et un deuxième seuil de confort, et
le procédé de commande de climatiseur comprend :

lorsque le climatiseur (10) reçoit l'instruction de commande d'entrée dans le mode de soufflage anti-direct ou que l'indice de taux de courant d'air atteint le premier seuil de confort, la commande du climatiseur (10) de façon à entrer dans le mode de soufflage anti-direct, ou
lorsque le climatiseur (10) reçoit l'instruction de commande d'entrée dans le mode de vent doux ou que l'indice de taux de courant d'air atteint le deuxième seuil de confort, la commande du climatiseur (10) de façon à entrer dans le mode de vent doux, où le deuxième seuil de confort est inférieur au premier seuil de confort.

4. Le procédé de commande de climatiseur selon la Revendication 1, où

le composant guide de vent (12) comprend un guide de vent extérieur (122) et un guide de vent intérieur (124), l'angle préréglé comprend un premier angle préréglé et un deuxième angle préréglé, et ladite commande du composant guide de vent (12) de façon à s'ouvrir à l'angle préréglé comprend :

la commande du guide de vent extérieur (122) de façon à s'ouvrir au premier angle préréglé, et la commande du guide de vent intérieur (124) de façon à s'ouvrir au deuxième angle préréglé.

5. Le procédé de commande de climatiseur selon la Revendication 1, où :

le niveau de vitesse du vent est calculé en fonction d'une règle de vent automatique du climatiseur (10) ou est déterminé en fonction d'un réglage d'utilisateur, et/ou où la vitesse de rotation de la soufflante (11) est reliée à la vitesse de rotation de soufflante maximale et la vitesse de rotation de soufflante minimale, le niveau de vitesse du vent maximal et le niveau de vitesse du vent du climatiseur (10) dans le mode confort.

6. Le procédé de commande de climatiseur selon la Revendication 1, où

le climatiseur (10) est préréglé avec une relation correspondante entre le temps de fonctionnement, l'humidité environnementale et la fréquence de fonctionnement, et ladite détermination de la fréquence de fonctionnement du climatiseur (10) en fonction du temps de fonctionnement et de l'humidité environnementale comprend : la détermination de la fréquence de fonctionnement du climatiseur (10) en fonction du temps de fonctionnement dans le mode confort, de l'humidité environnementale et de la relation correspondante.

7. Le procédé de commande de climatiseur selon la Revendication 1, où

le paramètre environnemental du climatiseur (10) comprend une température environnementale et une humidité environnementale, le paramètre système du climatiseur (10) comprend une température réglée par l'utilisateur et un niveau de vitesse du vent du climatiseur (10), et lorsque le mode de fonctionnement du climatiseur (10) est le mode sans vent, ladite acquisition d'un paramètre environnemental et d'un paramètre système du climatiseur (10) et la détermination d'une vitesse de rotation de la soufflante (11), d'un angle du composant guide de vent (12) et d'une fréquence de fonctionnement du climatiseur (10) en fonction du paramètre environnemental et/ou du paramètre système du climatiseur (10) comprennent :

lorsque le climatiseur (10) est dans le mode sans vent, l'acquisition (S31) de la température environnementale, de l'humidité environnementale, de la température réglée par l'utilisateur et du niveau de vitesse du vent, la détermination d'un angle d'ouverture du composant guide de vent (12) en fonction de la température environnementale, de l'humidité environnementale et de la température réglée par l'utilisateur, et la commande du composant guide de vent (12) de façon à s'ouvrir en fonction de l'angle d'ouverture du composant guide de vent (12), la détermination (S32) de la vitesse de rotation de la soufflante (11) en fonction du niveau de vitesse du vent et la commande de la soufflante (11) du climatiseur (10) de façon à fonctionner à la vitesse de rotation, et la détermination (S33) de la fréquence de fonctionnement du climatiseur (10) en fonction de l'angle d'ouverture du composant guide de vent (12), de la température environnementale et de l'humidité environnementale.

8. Le procédé de commande de climatiseur selon la Revendication 7, où le procédé de commande de climatiseur comprend :
lorsque le climatiseur (10) reçoit une instruction de commande d'entrée dans le mode sans vent ou que l'indice de taux de courant d'air atteint un seuil de confort, la commande du climatiseur (10) de façon à entrer dans le mode sans vent.

EP 3 882 534 B1

**9.** Le procédé de commande de climatiseur selon la Revendication 7, où :

- le composant guide de vent (12) comprend un guide de vent extérieur (122), et
ladite détermination de l'angle d'ouverture du composant guide de vent (12) en fonction de la température environnementale, de l'humidité environnementale et de la température réglée par l'utilisateur et la commande du composant guide de vent (12) de façon à s'ouvrir en fonction de l'angle d'ouverture du composant guide de vent (12) comprennent :

lorsque la température environnementale est supérieure à une première température préréglée et une première température réglée et que l'humidité environnementale n'est pas inférieure à une première humidité préréglée, la commande du guide de vent extérieur (122) de façon à s'ouvrir à un premier angle préréglé sans vent, où la première température réglée est déterminée par la température réglée par l'utilisateur et une valeur d'ajustement, et
lorsque la température environnementale n'est pas supérieure à une deuxième température préréglée ou que la température environnementale n'est pas supérieure à une deuxième température réglée ou que l'humidité environnementale n'est pas supérieure à une deuxième humidité préréglée, la commande du guide de vent extérieur (122) de façon à s'ouvrir à un deuxième angle préréglé sans vent, où la deuxième température réglée est la température réglée par l'utilisateur, la deuxième température préréglée est inférieure à la première température préréglée, la deuxième température réglée est inférieure à la première température réglée, la deuxième humidité préréglée est inférieure à la première humidité préréglée et le deuxième angle préréglé sans vent est inférieure au premier angle préréglé sans vent, et/ou

- le composant guide de vent (12) comprend un guide de vent intérieur (124), et
ladite détermination de l'angle d'ouverture du composant guide de vent (12) en fonction de la température environnementale, de l'humidité environnementale et de la température réglée par l'utilisateur et la commande du composant guide de vent (12) de façon à s'ouvrir en fonction de l'angle d'ouverture du composant guide de vent (12) comprennent :
la commande du guide de vent intérieur (124) de façon à s'ouvrir à un troisième angle préréglé sans vent.

**10.** Le procédé de commande de climatiseur selon la Revendication 9, où :

le climatiseur (10) est préréglé avec une relation correspondante entre l'angle d'ouverture du composant guide de vent (12), la température environnementale, l'humidité environnementale et la fréquence de fonctionnement, où le coefficient préréglé comprend un premier coefficient et un deuxième coefficient, la relation correspondante comprend une première relation et une deuxième relation, le premier coefficient est calculé par l'adaptation des points de fréquence de la première relation, et le deuxième coefficient est calculé par l'adaptation des points de fréquence de la deuxième relation, et
ladite détermination de la fréquence de fonctionnement du climatiseur (10) en fonction de l'angle d'ouverture du composant guide de vent (12), de la température environnementale et de l'humidité environnementale comprend :

la détermination d'une fréquence d'ajustement du climatiseur (10) en fonction de l'angle d'ouverture du composant guide de vent (12), de la température environnementale, de l'humidité environnementale et de la relation correspondante, et
le calcul de la fréquence de fonctionnement du climatiseur (10) en fonction de la fréquence d'ajustement, du niveau de vitesse du vent et d'un coefficient préréglé,

lorsque le guide de vent extérieur (122) est ouvert au premier angle préréglé sans vent, la détermination de la fréquence d'ajustement en fonction de la température environnementale, de l'humidité environnementale et de la première relation, et le calcul de la fréquence de fonctionnement du climatiseur (10) en fonction de la fréquence d'ajustement, du niveau de vitesse du vent et du premier coefficient, et
lorsque le guide de vent extérieur (122) est ouvert au deuxième angle préréglé sans vent, la détermination de la fréquence d'ajustement en fonction de la température environnementale, de l'humidité environnementale et du deuxième relation, et le calcul de la fréquence de fonctionnement du climatiseur (10) en fonction de la fréquence d'ajustement, du niveau de vitesse du vent et du deuxième coefficient.

**11.** Le procédé de commande de climatiseur selon la Revendication 7, où

36

le paramètre système comprend le temps de fonctionnement dans le mode sans vent, et
le procédé de commande de climatiseur comprend :

lorsque le climatiseur (10) est dans le mode sans vent, l'enregistrement du temps de fonctionnement dans le mode sans vent et la détermination de la fréquence de fonctionnement du climatiseur (10) en fonction de l'humidité environnementale et du temps de fonctionnement dans le mode sans vent, et
où le niveau de vitesse du vent est calculé en fonction d'une règle de vent automatique et du coefficient d'ajustement de vitesse du vent du climatiseur (10) ou calculé en fonction du niveau de vitesse du vent réglé par l'utilisateur et du coefficient d'ajustement de vitesse du vent.

12. Un dispositif électronique (200), comprenant : une mémoire (132, 201), un processeur (134, 202) et un programme informatique conservé en mémoire dans la mémoire (132, 201) et exécutable par le processeur (134, 202), où le processeur (134, 202), lorsqu'il exécute le programme, met en oeuvre un procédé de commande de climatiseur selon l'une quelconque des Revendications 1 à 11.

13. Un support à mémoire lisible par ordinateur possédant conservé en mémoire sur celui-ci un programme informatique qui, lorsqu'il est exécuté par un processeur (134, 202), met en oeuvre un procédé de commande de climatiseur selon l'une quelconque des Revendications 1 à 11.

FIG. 1

10

124

15

12

122

FIG. 2

FIG. 3

FIG. 4

FIG. 5

when the air conditioner is in the comfort
mode, controlling the wind guide component
to open at the pre-set angle

S21

acquiring the
environmental humidity

recording the working time
in the comfort mode

S22

determining the working
frequency of the air
conditioner

S23

acquiring the wind speed level of the air
conditioner, determining the rotating speed
of the blower according to the wind speed
level of the air conditioner and controlling
the blower of the air conditioner to operate
at the rotating speed

FIG. 6

when the air conditioner receives a control instruction to enter the comfort mode or a draft rating index reaches a comfort threshold, controlling the air conditioner to enter the comfort mode

S02

controlling the wind guide component to open at the pre-set angle

S21

acquiring the environmental humidity

recording the working time in the comfort mode

determining the working frequency of the air conditioner

S23

acquiring the wind speed level of the air conditioner, determining the rotating speed of the blower according to the wind speed level of the air conditioner and controlling the blower of the air conditioner to operate at the rotating speed

S22

FIG. 7

when the air conditioner is in an anti-direct blowing mode, controlling the wind guide component to open at the anti-direct blowing pre-set angle

S212

acquiring the environmental humidity

recording the working time in the anti-direct blowing mode

S222

determining the working frequency of the air conditioner

S232

acquiring the wind speed level of the air conditioner, determining the rotating speed of the blower according to the wind speed level of the air conditioner and controlling the blower of the air conditioner to operate at the rotating speed

FIG. 8

when the air conditioner receives the control instruction to enter the anti-direct blowing mode or the draft rating index reaches the first comfort threshold, controlling the air conditioner to enter the anti-direct blowing mode ⎯ S022

controlling the wind guide component to open at the anti-direct blowing pre-set angle ⎯ S212

acquiring the environmental humidity

recording the working time in the anti-direct blowing mode

S222

determining the working frequency of the air conditioner ⎯ S232

acquiring the wind speed level of the air conditioner, determining the rotating speed of the blower according to the wind speed level of the air conditioner and controlling the blower of the air conditioner to operate at the rotating speed

FIG. 9

controlling the outer wind guide to open at the first pre-set angle ⎯ S2122

controlling the inner wind guide to open at the second pre-set angle ⎯ S2124

FIG. 10

when the air conditioner is in a soft wind mode, controlling the wind guide component to open at the soft wind blowing pre-set angle

S214

acquiring the environmental humidity

recording the working time in the soft wind mode

S224

determining the working frequency of the air conditioner

S234

acquiring the wind speed level of the air conditioner, determining the rotating speed of the blower according to the wind speed level of the air conditioner and controlling the blower of the air conditioner to operate at the rotating speed

FIG. 11

when the air conditioner receives the control instruction to enter the soft wind mode or the draft rating index reaches the second comfort threshold, controlling the air conditioner to enter the soft wind mode — S024

controlling the wind guide component to open at the soft wind blowing pre-set angle — S214

acquiring the environmental humidity

recording the working time in the soft wind mode

determining the working frequency of the air conditioner — S234

acquiring the wind speed level of the air conditioner, determining the rotating speed of the blower according to the wind speed level of the air conditioner and controlling the blower of the air conditioner to operate at the rotating speed — S224

FIG. 12

controlling the outer wind guide to open at the first soft wind angle — S2142

controlling the inner wind guide to open at the second oft wind angle — S2144

FIG. 13

FIG. 14

acquiring the environmental temperature, the environmental humidity, the user set temperature and the wind speed level of the air conditioner, determining an opening angle of the wind guide component and controlling the wind guide component to open

S31

S32

determining the rotating speed of the blower according to the wind speed level of the air conditioner and controlling the blower of the air conditioner to operate at the rotating speed

S33

determining the working frequency of the air conditioner according to the opening angle of the wind guide component, the environmental temperature and the environmental humidity

FIG. 15

when the air conditioner receives a control instruction to enter the windless mode or the draft rating index reaches a third comfort threshold, controlling the air conditioner to enter the windless mode

S03

acquiring the environmental temperature, the environmental humidity, the user set temperature and the wind speed level of the air conditioner, determining an opening angle of the wind guide component, and controlling the wind guide component to open

S31

S32

determining the rotating speed of the blower according to the wind speed level of the air conditioner and controlling the blower of the air conditioner to operate at the rotating speed

S33

determining the working frequency of the air conditioner according to the opening angle of the wind guide component, the environmental temperature and the environmental humidity

FIG. 16

when the air conditioner receives a control instruction to enter the windless mode or the draft rating index reaches a third comfort threshold, controlling the air conditioner to enter the windless mode ⎤ S03

acquiring the environmental temperature, the environmental humidity, the user set temperature and the wind speed level of the air conditioner, determining an opening angle of the wind guide component, and controlling the wind guide component to open ⎤ S31

S33

calculating the wind speed level according to an automatic wind rule and the wind speed adjustment coefficient, or calculating the wind speed level according to the wind speed level set by the user and the wind speed adjustment coefficient

determining the opening angle of the outer wind guide

the fifth pre-set angle

the seventh pre-set angle

determining the adjustment frequency of the air conditioner according to the environmental temperature, the environmental humidity and the third corresponding relationship

determining the adjustment frequency of the air conditioner according to the environmental temperature, the environmental humidity and the fourth corresponding relationship ⎤ S332

S32

determining the rotating speed of the blower according to the wind speed level of the air conditioner and controlling the blower of the air conditioner to operate at the rotating speed

calculating the working frequency of the air conditioner according to the adjustment frequency, the wind speed level, and the first slope coefficient

calculating the working frequency of the air conditioner according to the adjustment frequency, the wind speed level, and the second slope coefficient ⎤ S334

S336

S338

FIG. 17

FIG. 18

FIG. 19

FIG. 20

hucr/%

70

65

60

55

50

hucr5

hucr4

hucr3

hucr2

hucr1

FIG. 21

| when the air conditioner is in the pre-set mode, acquiring the environmental temperature, the environmental humidity, and the user set temperature, controlling the wind guide component to open at the pre-set angle, and recording the working time in the pre-set mode | S100 |

| determining the rotating speed of the blower according to the wind speed level and controlling the blower of the air conditioner to operate at the rotating speed | S200 |

| determining the working frequency of the air conditioner according to the anti-direct blowing mode, the environmental humidity and the working time in the pre-set mode, or determining the working frequency of the air conditioner according to the soft wind mode, the environmental humidity and the working time in the pre-set mode, or determining the working frequency of the air conditioner according to the windless mode, the opening angle of the wind guide component, the environmental temperature and the environmental humidity. | S300 |

FIG. 22

FIG. 24

FIG. 25

turn on the
windless function

state 1 and state 3 are switched according to conditions

windless state 1 ←switched according to conditions→ windless state 2 —meet the time condition→ windless state 3

angle of the wind guide strip in state 1

angle of the wind guide strip in state 2

angle of the wind guide strip in state 3

rotating speed of the blower in state 1 ←limited wind speed— rotating speed of the blower in state 2 ←consistent wind speed— rotating speed of the blower in state 3

frequency of the compressor in stale 1

frequency of the compressor in stale 2 ←consistent frequency calculation— frequency of the compressor in stale 3

FIG. 26

windless state 1 → windless state 2 → windless state 3

FIG. 27

T1（ °C）

29
28
25
24

Temp3
Temp2
Temp1

Hucr（ %）

70
65
60
55
50

Hcur5
Hcur4
Hcur3
Hcur2
Hcur1

FIG. 28

FIG. 29

FIG. 30

FIG. 31

**EP 3 882 534 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108592338 A